(19) Europäisches Patentamt
European Patent Office
Office européen des brevets

(11) **EP 4 561 239 A1**

(12) **EUROPEAN PATENT APPLICATION**
published in accordance with Art. 153(4) EPC

(43) Date of publication:
**28.05.2025 Bulletin 2025/22**

(21) Application number: **23843258.7**

(22) Date of filing: **12.07.2023**

(51) International Patent Classification (IPC):
**H04W 72/23** (2023.01)      **H04W 72/04** (2023.01)
**H04L 27/26** (2006.01)

(52) Cooperative Patent Classification (CPC):
**H04L 27/26; H04W 72/04; H04W 72/23**

(86) International application number:
**PCT/KR2023/009928**

(87) International publication number:
**WO 2024/019407 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.07.2022   KR 20220088807
10.07.2023   KR 20230088926**

(71) Applicant: **KT Corporation
Seongnam-si, Gyeonggi-do 13606 (KR)**

(72) Inventor: **HONG, Sung Pyo
Seongnam-si Gyeonggi-do 13606 (KR)**

(74) Representative: **Brevalex
Tour Trinity
1 B Place de la Défense
92400 Courbevoie (FR)**

(54)   **UPLINK DATA PROCESSING METHOD AND DEVICE THEREFOR**

(57)   Provided are a method and apparatus for uplink transmission and reception through a configured grant (CG). The method for transmitting uplink data may include receiving, from a base station, configured grant (CG) configuration information for transmitting a plurality of physical uplink shared channels (PUSCH) within a single CG period, checking uplink grant information on at least one of the CG configuration information and L1 signaling; and transmitting a plurality of PUSCHs within a single CG period based on the uplink grant information.

*FIG.9*

```
              ┌─────────┐
              │  start  │
              └────┬────┘
                   │
    ┌──────────────────────────────────┐
    │ receive CG configuration information │───S910
    └──────────────┬───────────────────┘
                   │
    ┌──────────────────────────────────┐
    │      identify uplink grant        │───S920
    └──────────────┬───────────────────┘
                   │
    ┌──────────────────────────────────┐
    │        transmit PUSCH             │───S930
    └──────────────┬───────────────────┘
                   │
              ┌─────────┐
              │   end   │
              └─────────┘
```

## Description

### Technical Field

The disclosure relates to an uplink transmission/reception technology through a configured grant (CG).

### Background Art

eXtended reality (XR) and cloud gaming (CG) are broad terms referring to various types of augmented, virtual and mixed environments in human-machine and human-human communication performed with the help of handheld and wearable terminals. eXtended reality (XR) is used as a broad term encompassing augmented reality (AR), mixed reality (MR), and virtual reality (VR). Cloud gaming represents a use case in which most computations related to gaming are offloaded from a terminal to an edge or remote server. XR applications and computing/gaming typically require high throughput and low latency.

Many XR and CG use cases are characterized by quasi-periodic traffic with a high data rate (having a possible jitter) in a downlink video stream. There are often paired with a frequent uplink (e.g., pose/control updates) and/or uplink video stream. Both downlink and uplink traffic must adhere to a relatively strict packet delay budget (PDB).

Further, many XR and CG terminals have limited battery power. However, the current UE discontinuous reception (DRX) configuration is unsuitable due to the non-integer XR period of traffic, variable XR data rate, and the quasi-periodic nature of XR period.

The XR and CG service sets have diversity. Data streams (e.g., video) may change dynamically while the service is running through a radio network (e.g., NR).

Thus, packets within one frame are dependent on each other. However, typical mobile communication technology does not provide a specific method for enabling a terminal/base station/core network to effectively recognize and process XR application traffic.

### Detailed Description of the Invention

### Technical Problem

The disclosure may provide technology for efficiently processing uplink data. The disclosure may also offer uplink transmission/reception technology through a configured grant (CG) to efficiently process specific data such as XR.

### Technical Solution

In an aspect, the present embodiments may provide a method for transmitting uplink data by a UE. The method may include receiving, from a base station, CG configuration information for transmitting a plurality of physical uplink shared channels (PUSCHs) in one configured grant (CG) period, identifying uplink grant information based on at least one of the CG configuration information and L1 signaling, and transmitting the plurality of PUSCHs in the one CG period based on the uplink grant information.

In another aspect, the present embodiments may provide a method for receiving uplink data by a base station. The method may include transmitting, to a UE, CG configuration information for transmitting a plurality of physical uplink shared channels (PUSCHs) in one configured grant (CG) and receiving the plurality of PUSCHs in the one CG based on uplink grant information identified based on at least one of the CG configuration information and L1 signaling.

In another aspect, the present embodiments may provide a UE transmitting uplink data. The UE may include a receiver receiving, from a base station, CG configuration information for transmitting a plurality of physical uplink shared channels (PUSCHs) in one configured grant (CG) period, a controller identifying uplink grant information based on at least one of the CG configuration information and L1 signaling, and a transmitter transmitting the plurality of PUSCHs in the one CG period based on the uplink grant information.

In another aspect, the present embodiments may provide a base station receiving uplink data. The base station may include a transmitter transmitting, to a UE, CG configuration information for transmitting a plurality of physical uplink shared channels (PUSCHs) in one configured grant (CG) and a receiver receiving the plurality of PUSCHs in the one CG based on uplink grant information identified based on at least one of the CG configuration information and L1 signaling.

### Advantageous Effects

According to the present embodiments, uplink data may be efficiently processed. According to the present embodiments, specific data such as XR may be efficiently processed by using uplink transmission/reception technology through a configured grant (CG).

## Brief Description of the Drawings

FIG. 1 is a view schematically illustrating a structure for an NR wireless communication system.
FIG. 2 is a view illustrating a frame structure in an NR system.
FIG. 3 is a view illustrating a resource grid supported by radio access technology.
FIG. 4 is a view illustrating a bandwidth part supported by radio access technology.
FIG. 5 is a view exemplarily illustrating a synchronization signal block in radio access technology.
FIG. 6 is a view illustrating a random access procedure in radio access technology.
FIG. 7 is a view illustrating a CORESET.
FIG. 8 is a view illustrating an example of a structure for implementing a 5G-XR function in a 5G system.
FIG. 9 is a flowchart illustrating operations of a UE according to an embodiment.
FIG. 10 is a flowchart for describing operations of a base station according to another embodiment.
FIG. 11 is a view illustrating an information element included in an NR configured grant configuration.
FIG. 12 is a view illustrating an uplink data processing operation according to a non-integer traffic generation periodicity according to an embodiment.
FIG. 13 is a view illustrating application traffic generation according to an embodiment.
FIG. 14 is a block diagram illustrating a UE according to an embodiment.
FIG. 15 is a block diagram illustrating a base station according to an embodiment.

## Mode for Carrying out the Invention

Hereinafter, embodiments of the disclosure will be described in detail with reference to the accompanying drawings. In assigning reference numerals to components of each drawing, the same components may be assigned the same numerals even when they are shown on different drawings. When it is determined that including the subject matter of the disclosure would render it unclear, the detailed descriptions of the known art or functions may be skipped. The terms "comprises" and/or "comprising," "has" and/or "having," or "includes" and/or "including" when used in this specification are intended to specify the presence of stated features, regions, integers, steps, operations, elements, components and/or groups thereof, but do not preclude the presence or addition of one or more other features, regions, integers, steps, operations, elements, components, and/or groups thereof. As used herein, the singular forms "a", "an" and "the" are intended to include the plural forms as well, unless the context explicitly indicates otherwise.

Such terms as "first," "second," "A," "B," "(a)," and "(b)," may be used in describing the components of the present invention. These terms are provided merely to distinguish one component from another, and the essence, order, or number of the components are not limited by these terms.

In describing the positional relationship between components, when two or more components are described as being "connected", "coupled" or "linked", the two or more components may be directly "connected", "coupled" or "linked" ", or an intermediate component may be present. In this context, the intermediate component may be included in one or more of the two or more components that are "connected", "coupled" or "linked" to each other.

When such terms as, "after", "next to", "before", and similar expressions are used to describe the temporal flow relationship related to components, operation methods, and fabricating methods, they may include a non-continuous relationship unless the term "immediately" or "directly" is used.

When a component is designated by a value or its corresponding information (e.g., level), the value or the corresponding information may be interpreted as including a tolerance resulting from various factors (e.g., process factors, internal or external impacts, or noise).

In the disclosure, a 'wireless communication system' means a system that provides various communication services, such as voice and data packets, using radio resources and may include a UE, a base station, or a core network.

The present embodiments disclosed below may be applied to wireless communication systems that utilize various radio access technologies. For example, the present embodiments may be applied to various radio access technologies, such as code division multiple access (CDMA), frequency division multiple access (FDMA), time division multiple access (TDMA), orthogonal frequency division multiple access (OFDMA), single carrier frequency division multiple access (SC-FDMA), or non-orthogonal multiple access (NOMA). Further, radio access technology may mean not only a specific access technology, but also a communication technology for each generation established by various communication organizations, such as 3GPP (3rd generation partnership projection), 3GPP2, Wi-Fi, Bluetooth, IEEE (institute of electrical and electronic engineers), and ITU (International telecommunication union). For example, CDMA may be implemented as radio technology, such as universal terrestrial radio access (UTRA) or CDMA2000. TDMA may be implemented as GSM (global system for mobile communications)/GPRS (general packet radio service)/EDGE (enhanced data rates for GSM evolution). OFDMA may be implemented with a wireless technology, such as institute of electrical and electronic engineers (IEEE) 802.11 (Wi-Fi), IEEE 802.16 (WiMAX), IEEE 802-20, evolved UTRA (E-UTRA), and the like. IEEE 802.16m is an evolution of IEEE 802.16e and provides backward compatibility with IEEE 802.16e-based systems. UTRA is part of UMTS (universal mobile telecommunications system). 3GPP (3rd generation partnership project) LTE(long term evolution) is part of E-UMTS (evolved UMTS) using evolved-UMTS terrestrial radio access (E-UTRA) and adopts OFDMA for downlink and SC-FDMA for uplink. As such, the present embodiments may be applied to currently disclosed or commercialized radio access technologies and may also be applied to radio access technologies currently under development or to be developed in the future.

Meanwhile, in the disclosure, 'UE' is a comprehensive concept meaning a device including a wireless communication module that communicates with a base station in a wireless communication system and should be interpreted as a concept that may include not only user equipment (UE) in, e.g., WCDMA, LTE, NR, HSPA, and IMT-2020 (5G or new radio), but also a mobile station (MS), user terminal (UT), subscriber station (SS), or wireless device in GSM. Further, the UE may be a user portable device, such as a smartphone, according to the usage type and, in the V2X communication system, the UE may mean a vehicle or a device including a wireless communication module in the vehicle. Further, in the case of a machine type communication system, the UE may mean an machine type communication (MTC) terminal, machine-to-machine (M2M) terminal, or ultra reliable low latency communication (URLLC) terminal equipped with a communication module to perform machine type communication.

In the disclosure, 'base station' or 'cell' refers to a terminal that communicates with a UE in terms of a network and in concept encompasses various coverage areas, such as node-B, evolved node-B (eNB), gNode-B (gNB), low power node (LPN), sector, site, various types of antennas, base transceiver system (BTS), access point, point (e.g. transmission point, reception point, or transmission/reception point), relay node, mega cell, macro cell, micro cell, pico cell, femto cell, remote radio head (RRH), radio unit (RU), or small cell. Further, 'cell' may mean one including a bandwidth part (BWP) in the frequency domain. For example, 'serving cell' may mean the activation BWP of the UE.

Since there is a base station controlling one or more cells in the various cells enumerated above, the base station may be interpreted in two meanings. The base station may be 1) a device itself which provides a mega cell, a macro cell, a micro cell, a pico cell, a femto cell, or a small cell in relation to the radio region, or 2) the radio region itself. In 1), all devices that provide a predetermined radio region and are controlled by the same entity or interact to configure a radio region via cooperation are denoted as base stations. An embodiment of the base station is a transmission/reception point, transmission point, or reception point depending on the scheme of configuring the radio region. In 2), the radio region itself, in which a signal is received or transmitted from the point of view of the UE or a neighboring base station may be the base station.

In the disclosure, 'cell' may mean the coverage of the signal transmitted from the transmission/reception point, a component carrier having the coverage of the signal transmitted from the transmission/reception point (transmission point or transmission/reception point), or the transmission/reception point itself.

Uplink (UL) means a scheme for transmitting data from the UE to the base station or for receiving data at the UE from the base station, and downlink (DL) means a scheme for transmitting data from the base station to the UE and/or receiving data from the UE at the base station. Downlink may mean communication or a communication path from the multiple transmission/transmission points to the UE, and uplink may mean communication or a communication path from the UE to multiple transmission/reception points. In this case, in the downlink, the transmitter may be part of the multiple transmission/reception points, and the receiver may be part of the UE. Further, in the uplink, the transmitter may be part of the UE, and the receiver may be part of the multiple transmission/reception points.

Uplink and downlink configure a control channel, such as physical downlink control channel (PDCCH) or physical uplink control channel (PUCCH) and transmits and receives control information through the control channel. Uplink and downlink configure a data channel, such as physical downlink shared channel (PDSCH) or physical uplink shared channel (PUSCH) and transmit and receive data through the data channel. Hereinafter, the context in which signals are transmitted or received through a channel, such as PUCCH, PUSCH, PDCCH, and PDSCH, is expressed as 'transmitting or receiving PUCCH, PUSCH, PDCCH, and PDSCH.'

Although the technical spirit is described with a primary focus on the 3GPP LTE/LTE-A/new RAT (NR) communication system for clarity of description, the technical features are not limited to this communication system.

The 3GPP develops 5th-generation (5G) communication technology to meet the requirements of the ITU-R's next-generation radio access technology following its research on 4th-generation (4G) communication technology. Specifically, the 3GPP develops new NR communication technology separate from LTE-A pro and 4G communication technology, which have enhanced LTE-advanced technology to meet the requirements of ITU-R, as 5G communication technology. Both LTE-A pro and NR refer to 5G communication technologies. Hereinafter, 5G communication technology will be described focusing on NR unless specified as a specific communication technology.

Operating scenarios in NR define various operating scenarios by adding considerations for satellites, automobiles, and new verticals in the existing 4G LTE scenarios. From a service point of view, NR supports i) the enhanced mobile broadband (eMBB) scenario, ii) the massive machine communication (mMTC) scenario characterized by high UE density, wide deployment, low data rates, and asynchronous access, and iii) the ultra-reliability and low latency (URLLC) scenario, which requires high reliability and also supports high-speed mobility.

To meet such scenarios, NR introduces wireless communication systems that adopt new waveform and frame structure technologies, low-latency technologies, ultra-high frequency band (mmWave) support technologies, and forward compatibility technologies. In particular, the NR system suggests various technical changes focused on flexibility to provide forward compatibility. The main technical features of NR will be described below with reference to the drawings.

<Overview of NR system>

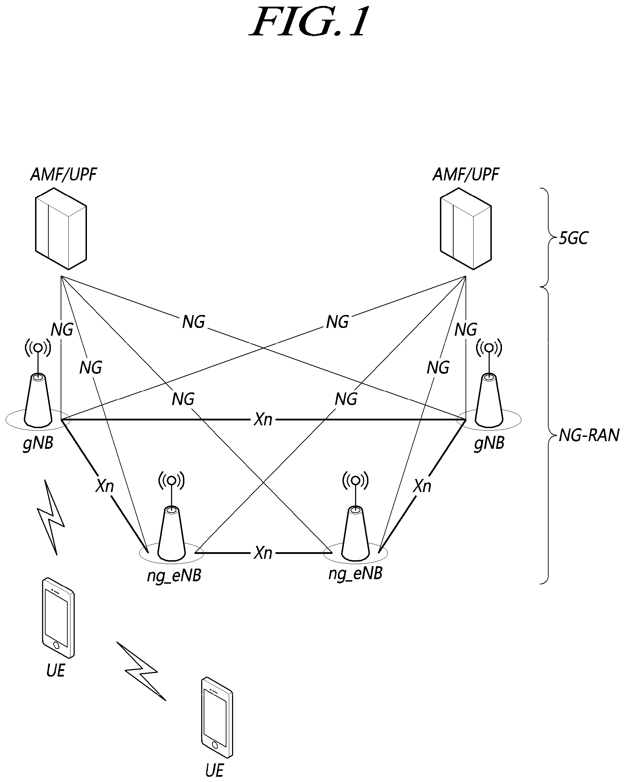

FIG. 1 is a view schematically illustrating a structure for an NR system.

Referring to FIG. 1, the NR system is divided into a 5G core network (5GC) and an NR-RAN part. The next generation radio access network (NG-RAN) includes gNB and ng-eNBs, which provide user plane (SDAP/PDCP/RLC/-MAC/PHY) and user equipment (UE) control plane (RRC) protocol termination. The gNBs or the gNBs and the ng-eNBs are interconnected through the Xn interface. The gNB and the ng-eNB are connected to the 5G core network (5GC) through the NG interface. The 5GC may include i) an access and mobility management function (AMF), which is in charge of the control plane, including UE access and mobility control function, and ii) a user plane function (UPF), which handles user data control function. NR supports both the below-6GHz frequency band (Frequency Range 1 (FR1) and the above-6GHz frequency band (Frequency Range 2 (FR2)).

The gNB means a base station that provides the UE with NR user plane and control plane protocol termination, and the ng-eNB means a base station that provides the UE with E-UTRA user plane and control plane protocol termination. In this disclosure, the base station should be understood as encompassing both gNB and ng-eNB and, when necessary, may be used to separately denote gNB or ng-eNB.

<NR waveform, numerology, and frame structure>

NR uses the CP-OFDM waveform with a cyclic prefix for downlink transmission and either CP-OFDM or DFT-s-OFDM for uplink transmission. The OFDM technology is easily integrated with multiple input multiple output (MIMO) and offers the advantages such as high frequency efficiency and the ability to use a low-complexity receiver.

Meanwhile, since the above-described three scenarios in NR have different requirements for data rate, latency, and coverage, it is necessary to efficiently meet the requirements of each scenario through the frequency band constituting any NR system. To achieve this, technology has been proposed for efficiently multiplexing radio resources based on a plurality of different numerologies.

Specifically, the NR transmission numerology is determined based on subcarrier spacing and cyclic prefix (CP). As shown in Table 1 below, it changes exponentially, with the exponent value of 2 used as $\mu$ relative to 15kHz.

[Table 1]

| $\mu$ | subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

As shown in Table 1 above, the NR numerologies may be divided into five types depending on subcarrier spacing. This is different from the fixed subcarrier spacing of 15kHz in LTE, which is a 4G communication technology. Specifically, in NR, the subcarrier spacings used for data transmission are 15, 30, 60, and 120 kHz, and the subcarrier spacings used for synchronization signal transmission are 15, 30, 120, and 240 kHz. Further, the extended CP is applied only to the 60kHz subcarrier spacing. Meanwhile, as part of the frame structure in NR, a frame with a length of 10ms, constituted of 10 subframes of equal length (1ms each), is defined. Each frame may be divided into two half frames of 5 ms, and each half frame may include 5 subframes. For the 15kHz subcarrier spacing, one subframe is constituted of one slot, and each slot is constituted of 14 OFDM symbols.

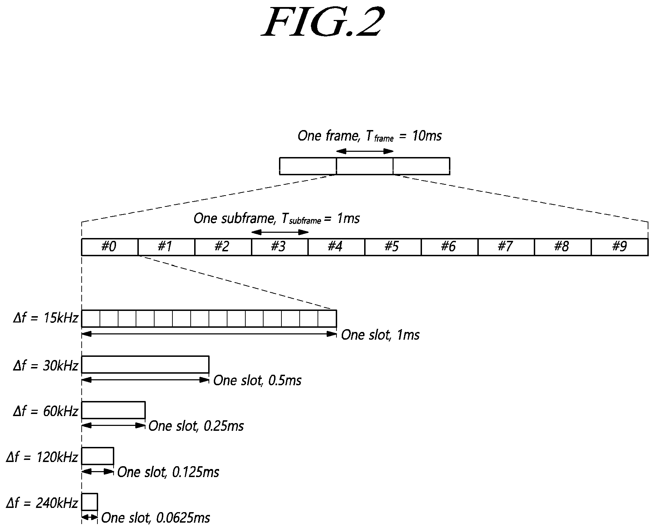

FIG. 2 is a view illustrating a frame structure in an NR system.

Referring to FIG. 2, a slot is fixedly composed of 14 OFDM symbols in the case of the normal CP, but the length of the slot in the time domain may vary depending on the subcarrier spacing. For example, for a numerology with a 15kHz subcarrier spacing, a slot has the same length as the subframe, as the length of 1ms. In contrast, for a numerology with a 30 kHz subcarrier spacing, a slot is constituted of 14 OFDM symbols, but two slots may be included in one subframe, as the length of 0.5ms. In other words, the subframe and the frame are defined as having a fixed length, and the slot is defined with the number of symbols, and the temporal length may vary depending on the subcarrier spacing.

Meanwhile, NR defines a slot as the basic unit for scheduling and, to reduce transmission latency in the radio section, adopts minislot (or also referred to as subslot or non-slot based schedule). When a wide subcarrier spacing is used, the length of one slot is inversely proportional to the subcarrier spacing, allowing for reduced transmission latency in the radio section. The minislot is designed for efficient support of the URLLC scenario and enables scheduling in units of 2, 4, or 7 symbols.

Further, NR defines uplink and downlink resource allocation as the symbol level within one slot, unlike LTE. To reduce HARQ latency, a slot structure has been introduced that enables HARQ ACK/NACK to be transmitted directly within the transmission slot. This slot structure is referred to as a self-contained structure in the description.

NR is designed to support a total of 256 slots, of which 62 slot formats are used in 3GPP Rel-15. Additionally, a common frame structure for FDD or TDD frame is supported through a combination of various slots. For example, NR supports a slot structure where all symbols in the slot are configured as downlink, a slot structure where all symbols are configured as uplink, and a slot structure where downlink symbols and uplink symbols are combined are supported. Further, NR supports data transmission that is distributed across and scheduled in one or more slots. Accordingly, the base station may inform the UE whether a given slot is a downlink slot, uplink slot, or flexible slot using the slot format indicator (SFI). The base station may indicate the slot format by indicating (e.g., providing) the index of the table configured through UE-specific RRC signaling via the SFI and may indicate it dynamically through downlink control information (DCI) or statically or semi-statically through RRC.

<NR physical resource>

In relation to the physical resource in NR, factors such as antenna port, resource grid, resource element, resource block, and bandwidth part are taken into consideration.

An antenna port is defined so that the channel carried by a symbol on an antenna port may be inferred from the channel carried by another symbol on the same antenna port. When the large-scale property of the channel carrying a symbol on one antenna port may be inferred from the channel carrying a symbol on a different antenna port, the two antenna ports may be considered to have a QC/QCL (quasi co-located or quasi co-location) relationship. Here, the large-scale properties include one or more of delay spread, Doppler spread, frequency shift, average received power, and received timing.

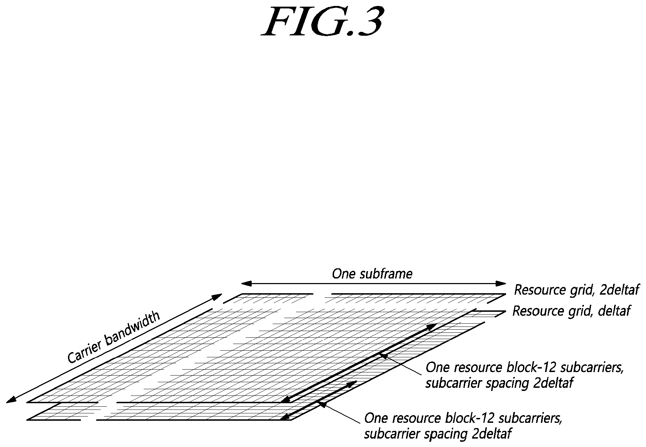

FIG. 3 is a view illustrating a resource grid supported by radio access technology.

Referring to FIG. 3, since NR supports a plurality of numerologies on the same carrier, a resource grid may be defined for each numerology. Furthermore, the resource grid may also vary depending on the antenna port, subcarrier spacing, or transmission direction.

The resource block is constituted of 12 subcarriers and is defined only in the frequency domain. Further, the resource element is constituted of one OFDM symbol and one subcarrier. Therefore, as shown in FIG. 3, the size of one resource block may vary depending on the subcarrier spacing. Further, in NR, "point A", which serves as a common reference point for the resource block grid, common resource block, physical resource block, and virtual resource block is defined.

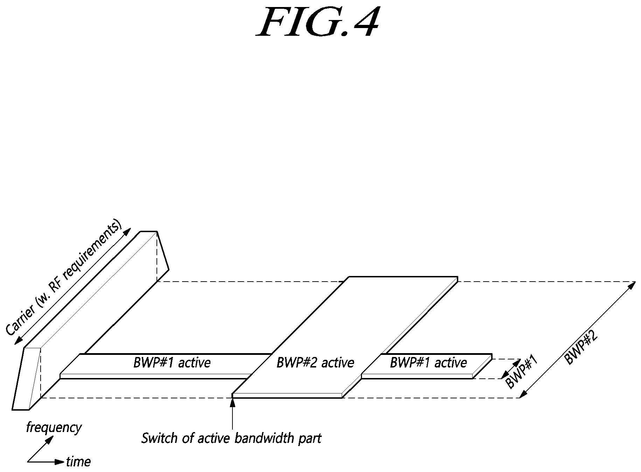

FIG. 4 is a view illustrating a bandwidth part supported by radio access technology.

In NR, unlike LTE, where the carrier bandwidth is fixed at 20Mhz, the maximum carrier bandwidth ranges from 50Mhz to 400Mhz, depending on the subcarrier spacing. Therefore, it is not assumed that all UEs utilize all available carrier bandwidths. Accordingly, in NR, as shown in FIG. 4, a bandwidth part (BWP) may be designated within the carrier bandwidth and allocated for use by the UE. Further, the bandwidth part is associated with one numerology, is composed of a subset of contiguous common resource blocks and may be activated dynamically over time. Up to four bandwidth parts (BWPs) may be configured in the UE for each of uplink and downlink. Data is transmitted/received using the bandwidth part (BWP) activated at a given time.

For paired spectra, the uplink and downlink bandwidth parts are configured independently, while for unpaired spectra, the bandwidth parts of uplink and downlink are paired to share the center frequency, thereby preventing unnecessary frequency re-tunning between downlink and uplink operations.

<NR initial access>

In NR, the UE performs a cell search and random access procedure to connect to the base station and perform communication.

Cell search is a procedure where the UE synchronizes with the cell of the base station using the synchronization signal block (SSB) transmitted by the base station, retrieves the physical layer cell ID, and acquires system information.

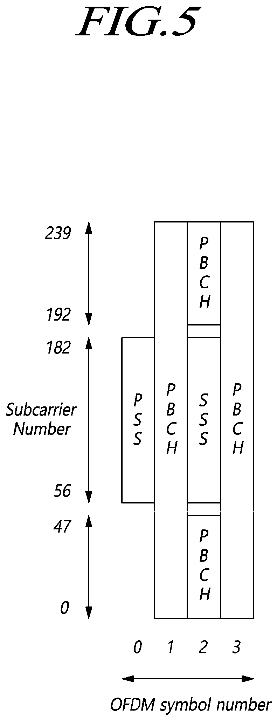

FIG. 5 is a view exemplarily illustrating a synchronization signal block in radio access technology.

Referring to FIG. 5, the SSB is constituted of a primary synchronization signal (PSS) and a secondary synchronization signal (SSS), each occupying 1 symbol and 127 subcarriers, respectively, along with a PBCH spanning 3 OFDM symbols and 240 subcarriers.

The UE monitors the SSB in time and frequency domains and receives the SSB.

The SSB may be transmitted up to 64 times within 5 ms. Multiple SSBs are transmitted using different transmission beams during 5 ms time, and the UE performs detection assuming that SSBs are transmitted every 20ms period based on a specific beam used for transmission. The number of beams available for SSB transmission within 5 ms may increase as the frequency band increases. For example, up to 4 SSB beams may be transmitted below 3 GHz, SSBs may be transmitted using up to 8 different beams in a frequency band of 3 to 6 GHz, and up to 64 different beams may be utilized in a frequency band of 6 GHz or higher.

Two SSBs are included in one slot, and the start symbol position and the number of repetitions within the slot are determined based on the subcarrier spacing, as follows.

Meanwhile, the SSB is not transmitted at the center frequency of the carrier bandwidth unlike the SS of typical LTE. Instead, the SSB may be transmitted at locations other than the center of the system band and, in the case supporting wideband operation, multiple SSBs may be transmitted across the frequency domain. Accordingly, the UE monitors the SSB using a synchronization raster, which represents candidate frequency locations for monitoring the SSB. The carrier raster and synchronization raster, which provide center frequency location information for initial access, are newly defined in NR. Furthermore, the synchronization raster features a wider frequency interval than the carrier raster, enabling faster SSB searches by the UE.

The UE may obtain the master information block (MIB) through the PBCH of the SSB. The master information block (MIB) includes the minimum information necessary for the UE to receive remaining system information (remaining minimum system information (RMSI) broadcast by the network. Additionally, the PBCH may include information about the position of the first DM-RS symbol in the time domain, information required for the UE to monitor SIB1 (e.g., SIB1 numerology information, information related to SIB1 CORESET, search space information, PDCCH-related parameter information, etc.), offset information between the common resource block and the SSB (the absolute location of the SSB within the carrier is transmitted through SIB1), and similar information. Here, the SIB1 numerology information is equally applied to certain messages used in the random access procedure that enables the UE to access the base station after completing the cell search procedure. For example, the numerology information about SIB1 may be applied to at least one of messages 1 to 4 for the random access procedure.

The above-described RMSI may mean system information block 1 (SIB1). SIB1 is broadcast periodically (e.g., every 160 ms) in the cell. SIB1 includes information necessary for the UE to perform the initial random access procedure and is periodically transmitted through the PDSCH. To receive SIB1, the UE must first obtain numerology information associated with SIB1 transmission and control resource set (CORESET) information used for SIB1 scheduling through the PBCH. The UE identifies scheduling information for SIB1 using SI-RNTI in CORESET and obtains SIB1 from PDSCH according to scheduling information. The remaining SIBs, other than SIB1, may be transmitted periodically or upon request by the UE.

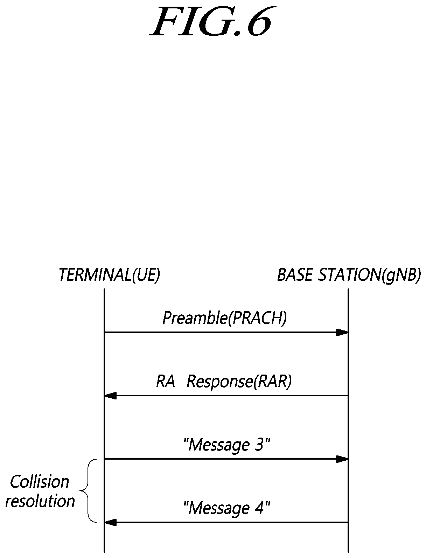

FIG. 6 is a view illustrating a random access procedure in radio access technology to which the present embodiments may apply.

Referring to FIG. 6, if the cell search is successfully completed, the UE transmits a random access preamble to initiate random access to the base station. The random access preamble is transmitted through PRACH. Specifically, the random access preamble is transmitted to the base station through the PRACH composed of contiguous radio resources within a periodically repeated specific slot. In general, when the UE initially accesses the cell, a contention-based random access procedure is performed, and when random access is performed for beam failure recovery (BFR), a non-contention-based random access procedure is performed.

The UE receives a random access response to the transmitted random access preamble. The random access response may include a random access preamble identifier (ID), uplink radio resource (UL grant), temporary cell-radio network temporary identifier (C-RNTI), and time alignment command (TAC). Since one random access response may include random access response information for multiple UEs, the random access preamble identifier may be included to indicate which UE the included UL grant, temporary C-RNTI, and TAC apply to. The random access preamble identifier may be an identifier for the random access preamble received by the base station. The TAC may be included as information for the UE to adjust uplink synchronization. The random access response may be indicated by the random access identifier on the PDCCH, specifically, the random access-radio network temporary identifier (RA-RNTI).

Upon receiving a valid random access response, the UE processes the information included in the random access response and performs scheduled transmissions to the base station. For example, the UE applies the TAC and stores the temporary C-RNTI. Further, the UE transmits data stored in its buffer or newly generated data to the base station using the UL grant. In this case, information that may identify the UE should be included.

Finally, the base station transmits a downlink message for contention resolution, and the UE receives the downlink message.

<NR CORESET>

In NR, the downlink control channel is transmitted in a control resource set (CORESET) having a length of 1 to 3 symbols and carries uplink/downlink scheduling information, slot format index (SFI), transmit power control (TPC) information, and other related information.

As such, NR introduced the concept of CORESET to secure the flexibility of the system. The control resource set (CORESET) refers to a time-frequency resource for a downlink control signal. The UE may use one or more search spaces in CORESET time-frequency resources to decode control channel candidates. A quasi co-location (QCL) assumption for each CORESET has been defined, which is used not only to indicate the characteristics of the analog beam direction but also the latency spread, Doppler spread, Doppler shift, and average latency, all characteristics assumed by the typical QCL.

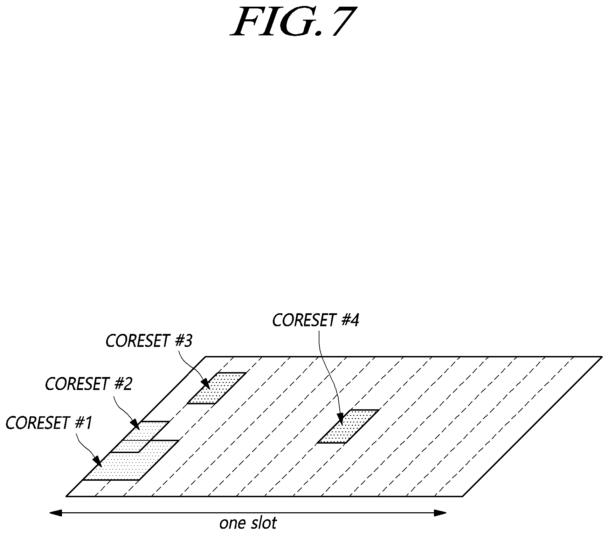

FIG. 7 is a view illustrating a CORESET.

Referring to FIG. 7, the CORESET may exist in various forms within a carrier bandwidth and within one slot. In the time domain, the CORESET may be constituted of up to 3 OFDM symbols. Further, the CORESET is defined as a multiple of 6 resource blocks up to the carrier bandwidth in the frequency domain.

The first CORESET (CORESET 0) is indicated through the MIB as part of the initial bandwidth part configuration to enable the UE to receive additional configuration and system information from the network. After establishing a connection with the base station, the UE may receive and configure one or more CORESET information through RRC signaling.

As used herein, terms such as frequency, frame, subframe, resource, resource block, region, band, subband, control channel, data channel, synchronization signal, various reference signals, various signals, and various messages related to new radio (NR) may be interpreted with various meanings as currently used or as they may be defined in the future.

The disclosure relates to a method and device for processing packet data for a specific application service such as XR/media in a mobile communication network. For example, the disclosure proposes a packet data processing technology that considers application traffic characteristics using information provided by the higher/application layer in a wireless network. Additionally, a technology for effectively processing XR/media data in the MAC layer is also introduced.

Packets for a specific application service may have the attribute of mutual dependency. For example, packets within one frame may depend on each other. The application may require all packets to decode a corresponding frame. The loss of one packet may, although other correlated packets are successfully transmitted, render the corresponding packets useless. For example, requirements may be imposed on XR applications based on application data units (ADUs)/media units rather than single packets/PDUs. Packets at different positions in different frame types (I/P frame) or group of picture (GoP) even though they are in the same video stream may have different contributions to user experience. Accordingly, layered QoS handling within the video stream may loosen requirements and lead to higher efficiency.

If additional information from the higher/application layer may be utilized for the running service/application, it may be useful in facilitating the selection of a radio parameter. However, no specific method is currently provided for the UE/base station/core network to effectively recognize and process the characteristics of XR application traffic.

As such, typical mobile communication technology does not provide a specific method for enabling a terminal/base station/core network to effectively recognize and process XR application traffic.

As designed to address such issues, the present embodiments propose a configuration method and device for providing packet data processing that considers application traffic characteristics using information provided by the higher/application layer in a wireless network.

In this disclosure, a control method will be described based on 5GS/NR technology. However, embodiments are not limited thereto. This is only for convenience of description and ease of understanding. Embodiments may be applied to any system/radio access technology (e.g., LTE, 6G). Embodiments described in the disclosure include information elements specified in the NR/5GS standards (e.g., TS 38.321 as a MAC standard, TS 38.331 as an NR RRC standard, and TS 23.501 as a system structure standard) and the content of operations. Although the disclosure does not contain the content of the UE operation related to the definitions for the corresponding information elements, the corresponding content set forth in the standards may be incorporated into the present embodiments.

Any function described below is defined as an individual-UE capability (UE radio capability or UE core network capability) and may be transmitted by the UE to the base station/core network entity (e.g. AMF/SMF) through corresponding signaling. Alternatively, various functions may be combined/merged to be defined as the corresponding UE capability and transmitted to the base station/core network entity through corresponding signaling by the UE.

The base station may transmit/indicate information indicating allowing/supporting/configuring the corresponding function/function combination for any function or any function combination, described below, to the UE through an RRC message. For example, it may be indicated to the UE before or simultaneously with configuring/applying the corresponding function/function combination. The RRC message may be broadcast through system information. Or, it may be indicated to the UE through a dedicated RRC message.

For convenience of description and ease of understanding, a term "PDU set" may denote a unit divided by the application/application layer, a unit divided within the application, a unit having a correlation between data/stream/packets in one application, a unit having dependency between data/stream/packets in one application, a unit divided with different traffic characteristics/streams within one flow, a unit divided with different traffic characteristics/streams within one PDU session, a unit divided based on any information/field/metadata included/used/added in the application, or PDUs carrying the payload of one unit information generated at the application level. the term "PDU set" may be replaced with any other term such as an application data unit (ADU), an application unit, a media unit (MU), an application packet data unit, a group of picture (GoP) unit, a traffic type (e.g., XR viewer pose information unit, tactile information, video, audio, degree of freedom) specific unit, frame type, stream type, or the like.

In an aspect, a method may be provided for processing an application data flow by a user equipment (UE). The method may include receiving a higher layer message including radio resource configuration information associated with at least one of i) assistance information for an application traffic characteristic and ii) PDU set information, applying the radio resource configuration information to the UE, and transmitting/receiving user plane data generated in an application layer using the radio resource configuration information. All PDUs in a single PDU set may be required or not to use corresponding unit information by the application layer. (A PDU Set is composed of one or more PDUs carrying the payload of one unit of information generated at the application level (e.g., a frame or video slice for XRM Services). In some implementations all PDUs in a PDU Set are needed by the application layer to use the corresponding unit of information. In other implementations, the application layer can still recover parts or all of the information unit, when some PDUs are missing) Further, information indicating whether the application layer may recover the whole or part of information when some PDUs are lost may be transmitted from the application layer/application server/application function/UE to the base station. For example, the corresponding information may be transmitted from the application server/application function via the core network to the core network through control plane signaling. Alternatively, the corresponding information may be included and transmitted in a header (e.g., GTP-U header or a header including PDU-set-related information) carrying corresponding data when transmitted from the application server to the UPF on the user plane and transmitted from the UPF to the base station. The base station may indicate the corresponding information or corresponding data to the UE to allow the UE to discern the corresponding data and transmit it to the base station. Alternatively, the UE may transmit related information to the base station through RRC signaling.

Functions described below may be performed individually and independently. Functions described below may be arbitrarily combined/merged and it is obvious that they are also included in the scope of present embodiments. For example, one or more functions may be applied simultaneously.

Any information about the XR application described below may be traffic characteristic information (e.g., any statistics/statistical quantity such as expected value/average, deviation, standard deviation, etc.) statistically/empirically obtained/calculated/derived by the UE/network. Therefore, any information included herein may indicate one or more of the average (expected value)/minimum/maximum/standard deviation values. For example, if the information 'update rate' is included, it may mean an average (expected value)/minimum/maximum/standard deviation update rate. This is for convenience of description, and all of the information in the disclosure may be used as statistical information. Alternatively, it may be information preconfigured in the UE/network or provisioned through OAM/application server/application function/UDM.

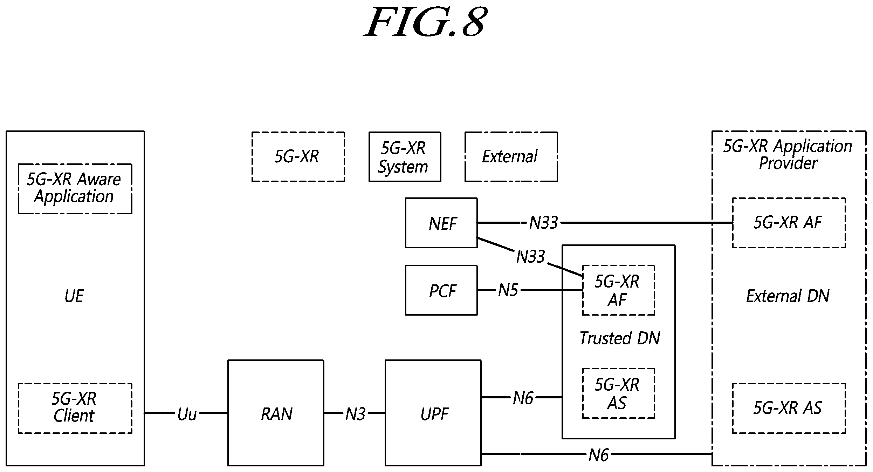

FIG. 8 is a view illustrating an example of a structure for implementing a 5G-XR function in a 5G system.

For convenience of description and ease of understanding, embodiments of the disclosure will be described based on FIG. 8. However, the embodiments are not limited to FIG. 8. For example, the embodiments may be applied to any system/radio access technology (e.g., LTE or 6G).

Referring to FIG. 8, the 5G-XR AF indicates an application function for a 5G-XR service. 5G-XR AS indicates an application server for a 5G-XR service. 5G-XR client indicates an internal function of a UE for a 5G-XR service. In the UE, the XR client may indicate a transceiver of an XR session accessed through APIs or the like by an XR application. The XR client may perform communicating/signaling with the 5G-XR AF to configure/control/support an XR session (or delivery of the XR session). The XR client may access XR data and communicate with the 5G-XR AS to process corresponding data. The 5G-XR AF provides various control functions for processing the XR session on the UE and may perform signaling with PCF/NEF for QoS control. The 5G-XR AS indicates an application server that hosts 5G XR media and media functions.

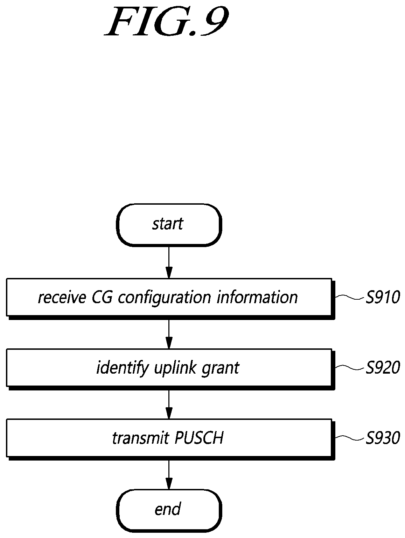

FIG. 9 is a flowchart illustrating operations of a UE according to an embodiment.

Referring to FIG. 9, the UE may perform the step of receiving, from the base station, CG configuration information for transmitting a plurality of physical uplink shared channels (PUSCHs) within a single configured grant (CG) period (S910).

According to an embodiment, the CG refers to the resource allocation method or type used in the communication procedure where the UE transmits an uplink signal through an uplink grant previously configured to the UE by the base station. The CG may be allocated with a predetermined periodicity, and the UE may be allocated an uplink resource using the CG method instead of the typical dynamic resource allocation through PDCCH to transmit an uplink signal.

According to an embodiment, the CG configuration information may include information for allocating a radio resource to transmit a plurality of PUSCHs in one CG period. According to another embodiment, the CG configuration information may include CG period information.

According to an embodiment, the CG configuration information may include at least one of i) information about the number of consecutive slots configured to transmit the plurality of PUSCHs in the one CG period, ii) information about the number of PUSCHs configured to transmit the plurality of PUSCHs in the one CG period, and iii) a start symbol and length information for a first PUSCH in the uplink grant. Further, the CG configuration information may further include at least one of CG period information, frequency resource information, MCS information, transport block size information, antenna port information, frequency hopping offset information for uplink signal transmission, time reference SFN information, and pathloss index-related information.

The configuration information may be transferred through higher layer signaling. For example, the CG configuration information may be included in the RRC message and transmitted to the UE. For example, the CG configuration information may be included in an RRC reconfiguration message. Alternatively, the CG configuration information may be included in PUSCH configuration information. The PUSCH configuration information may also be included in the RRC reconfiguration message.

The UE may perform the step of identifying uplink grant information based on at least one of the CG configuration information and L1 signaling (S920).

The UE may identify the uplink grant of the CG method through CG configuration information and/or L1 signaling. For example, the UE may be allocated two types of uplink grants for transmitting a plurality of PUSCHs in one CG periodicity. In one scenario, the UE may be allocated an uplink grant based on CG configuration information. This scenario may be classified as type 1. In another scenario, the UE may be allocated an uplink grant based on CG configuration information and L1 signaling. This scenario may be classified as type 2.

Meanwhile, the uplink grant may be identified based on at least one of i) information about the number of consecutive slots configured to transmit multiple PUSCHs within a single CG period, ii) information about the number of PUSCHs configured to transmit multiple PUSCHs within a single CG period, and iii) a start symbol and length information for a first PUSCH in the uplink grant.

According to an embodiment, the CG configuration information may include all of i) the information about the number of consecutive slots configured to transmit multiple PUSCHs within a single CG period, ii) the information about the number of PUSCHs configured to transmit multiple PUSCHs within a single CG period, and iii) the start symbol and length information for the first PUSCH in the uplink grant. In this case, the UE may identify the uplink grant for transmission of multiple PUSCHs within a single CG period using only the CG configuration information through the type 1 method.

According to another embodiment, the CG information may include i) the information about the number of consecutive slots configured to transmit multiple PUSCHs within a single CG period and ii) the information about the number of PUSCHs configured to transmit multiple PUSCHs in a single CG period, and L1 signaling may include iii) the start symbol and length information for the first PUSCH in the uplink grant. In this case, the UE may identify the uplink grant for transmission of multiple PUSCHs within a single CG period using both the CG configuration information and L1 signaling through the type 2 method.

Here, only information related to the time domain radio resource has been described as an example, but information necessary for signal transmission such as the above-described MCS or the frequency domain radio resource may also be included. For example, the UE may identify all parameters necessary for transmission of a plurality of PUSCHs (e.g., multiple PUSCHs) within a single CG periodicity through CG configuration information. Alternatively, the UE may identify theses parameters necessary for transmission of the plurality of PUSCHs in one CG periodicity through CG configuration information and L1 signaling. In this case, the various parameters may be distributed between the CG configuration information and L1 signaling in any combination.

Further, L1 signaling may refer to, e.g., information received through downlink control information (DCI), MAC CE, or PDSCH received through the PDCCH.

L1 signaling may include activation indication information for activating any one of parameter sets allocated to the UE through the CG configuration information. For example, the DCI or MAC CE may include activation indication information for activating the CG configuration information.

Meanwhile, the information about the number of consecutive slots configured to transmit the plurality of PUSCHs within a single CG period and the information about the number of PUSCHs configured to transmit the plurality of PUSCHs within a single CG period may be configured as parameters distinguished from information about the number of slots allocated within a single CG period following a time instance of a CG offset and a number of consecutive PUSCHs configured in a CG in one slot.

For example, the parameters included in the CG configuration information configured to transmit the plurality of PUSCHs within a single CG period according to an embodiment may be distinguished from the parameters of the CG configuration information following the time instance of the CG offset. For example, the RRC message may include CG configuration information used for transmission of one PUSCH transmission within a single CG period separately from CG configuration information used for transmission of multiple PUSCHs within a single CG period. Alternatively, the RRC message may include CG configuration information used for transmission of one PUSCH within a single CG period separately from CG configuration information for repeated transmission of a PUSCH allocated through the CG.

The UE may perform the step of transmitting the plurality of PUSCHs within a single CG period based on the uplink grant information (S930).

The UE may transmit, to the base station, the uplink data channel through the PUSCH radio resource identified through type 1 or type 2 as described above.

According to an embodiment, the plurality of PUSCHs transmitted according to the uplink grant may have one or more parameters set to be the same among frequency domain resource allocation (FDRA), modulation and coding scheme (MCS), transport block size (TBS), antenna port, frequency hopping offset (frequencyHoppingOffset), pathloss reference index (pathlossReferenceIndex), time reference SFN (timeReferenceSFN), and pathloss reference index 2 (pathlossReferenceIndex2). In other words, some or all of the parameters of the uplink grant for transmission of the plurality of PUSCHs allocated in one period may be configured to be the same for each PUSCH.

However, as described above, the uplink grant may be configured to not support repeated transmission. For example, the plurality of PUSCHs transmitted in one CG period may include different transport blocks (TBs).

Through the above operation, transmission of a plurality of PUSCHs, rather than repeated transmissions, may be performed within a single CG period. Therefore, PUSCH may be effectively transmitted according to the characteristics of XR data in accordance with an embodiment.

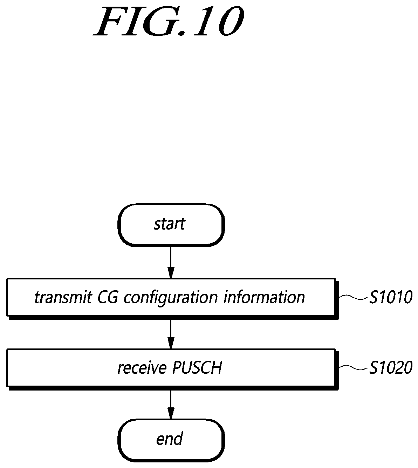

FIG. 10 is a flowchart for describing operations of a base station according to an embodiment.

Referring to FIG. 10, the base station may perform the step of transmitting CG configuration information for transmitting, to the UE, a plurality of physical uplink shared channels (PUSCHs) within a single configured grant (CG) period (S1010).

According to an embodiment, the base station may generate CG configuration information for configuring a CG in the UE. For example, the CG configuration information may include information for allocating a radio resource to transmit a plurality of PUSCHs (e.g., multiple PUSCHs) within a single CG period. As another example, the CG configuration information may include CG period information.

According to an embodiment, the CG configuration information may include at least one of i) information about the number of consecutive slots configured to transmit the plurality of PUSCHs within a single CG period, ii) information about the number of PUSCHs configured to transmit the plurality of PUSCHs within a single CG period, and iii) a start symbol and length information for a first PUSCH in the uplink grant. Further, the CG configuration information may further include at least one of CG period information, frequency resource information, MCS information, transport block size information, antenna port information, frequency hopping offset information for uplink signal transmission, time reference SFN information, and pathloss index-related information.

The configuration information may be transferred through higher layer signaling. For example, the CG configuration information may be included in the RRC message and transmitted to the UE. For example, the CG configuration information may be included in an RRC reconfiguration message. Alternatively, the CG configuration information may be included in PUSCH configuration information. The PUSCH configuration information may also be included in the RRC reconfiguration message.

The base station may perform the step of receiving the plurality of PUSCHs within a single CG period based on uplink grant information identified based on at least one of the CG configuration information and L1 signaling (S1020).

The UE may identify uplink grant information based on at least one of the CG configuration information and L1 signaling. For example, the UE may be allocated two types of uplink grants for transmitting a plurality of PUSCHs within a single CG period. For example, the UE may be allocated an uplink grant based on CG configuration information. This case may be classified as type 1. As another example, the UE may be allocated an uplink grant based on CG configuration information and L1 signaling. This case may be classified as type 2.

Meanwhile, the uplink grant may be identified based on at least one of i) information about the number of consecutive slots configured to transmit the plurality of PUSCHs within a single CG period, ii) information about the number of PUSCHs configured to transmit the plurality of PUSCHs within a single CG period, and iii) a start symbol and length information for a first PUSCH in the uplink grant.

According to an embodiment, the CG configuration information may include all of i) the information about the number of consecutive slots configured to transmit the plurality of PUSCHs in the one CG period, ii) the information about the number of PUSCHs configured to transmit the plurality of PUSCHs in the one CG period, and iii) the start symbol and length information for the first PUSCH in the uplink grant may be included in. In this case, the UE may identify the uplink grant for transmission of the plurality of PUSCHs in one CG period using only the CG configuration information through the type 1 method.

According to another embodiment, the CG configuration information may include i) the information about the number of consecutive slots configured to transmit the plurality of PUSCHs in the one CG period and ii) the information about the number of PUSCHs configured to transmit the plurality of PUSCHs in the one CG period, and L1 signaling may include iii) the start symbol and length information for the first PUSCH in the uplink grant. In this case, the UE may identify the uplink grant for transmission of the plurality of PUSCHs within a single CG period using both the CG configuration information and L1 signaling through the type 2 method.

In this case, the base station may further perform the step of transmitting L1 signaling to the UE. The base station may control whether to activate the CG configuration information configured in the UE by transmitting L1 signaling after transmitting the CG configuration information. Further, L1 signaling may further include parameters required to identify the uplink grant.

Here, only information related to the time domain radio resource has been described as an example, but information necessary for signal transmission such as the above-described MCS or the frequency domain radio resource may also be included. For example, the UE may identify all parameters necessary for transmission of a plurality of PUSCHs in one CG periodicity through CG configuration information. Alternatively, the UE may identify these parameters through CG configuration information and L1 signaling. In this case, the various parameters may be distributed to the CG configuration information and L1 signaling in any combination.

L1 signaling may refer to, e.g., information received through downlink control information (DCI), MAC CE, or PDSCH received through the PDCCH.

L1 signaling may include activation indication information for activating any one of parameter sets allocated to the UE through the CG configuration information. For example, the DCI or MAC CE may include activation indication information for activating the CG configuration information.

Meanwhile, i) the information about the number of consecutive slots configured to transmit the plurality of PUSCHs within a single CG period and ii) the information about the number of PUSCHs configured to transmit the plurality of PUSCHs within a single CG period may be configured as parameters distinguished from information about the number of slots allocated in one CG period following a time instance of a CG offset and the number of consecutive PUSCHs configured in a CG in one slot.

For example, the parameters included in the CG configuration information configured to transmit the plurality of PUSCHs within a single CG period according to an embodiment may be distinguished from the parameters of the CG configuration information following the time instance of the CG offset. For example, the RRC message may include CG configuration information used for transmission of one PUSCH transmission in one CG period separately from CG configuration information used for transmission of a plurality of PUSCHs in one CG period. Alternatively, the RRC message may include CG configuration information used for transmission of one PUSCH in one CG period separately from CG configuration information for repeated transmission of a PUSCH allocated through the CG.

The base station may receive the uplink data channel through the PUSCH radio resource identified through type 1 or type 2 as described above.

For example, the plurality of PUSCHs transmitted according to the uplink grant may have one or more parameters set to be the same among frequency domain resource allocation (FDRA), modulation and coding scheme (MCS), transport block size (TBS), antenna port, frequency hopping offset (frequencyHoppingOffset), pathloss reference index (pathlossReferenceIndex), time reference SFN (timeReferenceSFN), and pathloss reference index 2 (pathlossReferenceIndex2). In other words, some or all of the parameters of the uplink grant for transmission of the plurality of PUSCHs allocated in one period may be configured to be the same for each PUSCH.

However, as described above, the uplink grant may be configured to not support repeated transmission. For example, the plurality of PUSCHs transmitted in one CG period may include different transport blocks (TBs).

Through the above operation, the base station may receive a plurality of PUSCHs, rather than repeated transmissions, within the CG period. Therefore, PUSCH may be effectively received and processed according to the characteristics of XR data in accordance with an embodiment.

Described below are various embodiments that may be performed by the above-described UE or base station. Some or all of the embodiments described below may be performed by the UE or the base station. Further, some of the embodiments may be performed in combination. Alternatively, any of the described combination of the embodiments may be performed by the UE or base station.

CG scheduling processing considering non-integer traffic characteristics

It is necessary to perform efficient scheduling considering the traffic characteristics of XR/media traffic. For example, XR/Media traffic is generated in non-integer periodicity. Video traffic is generated as a sequence of consecutive video frames with a frame rate equal to 30/60/90/120 frames per second. Accordingly, traffic is generated with a periodicity of 30fps: 33.33ms, 60fps: 16.67ms, 90fps: 11.11ms, 120fps: 8.33ms, etc. For uplink traffic, if the in-UE processing delay is ignored, it is preferable to configure configured grant (CG) scheduling (uplink transmission without a dynamic grant) to account for the corresponding non-integer periodicity characteristics.

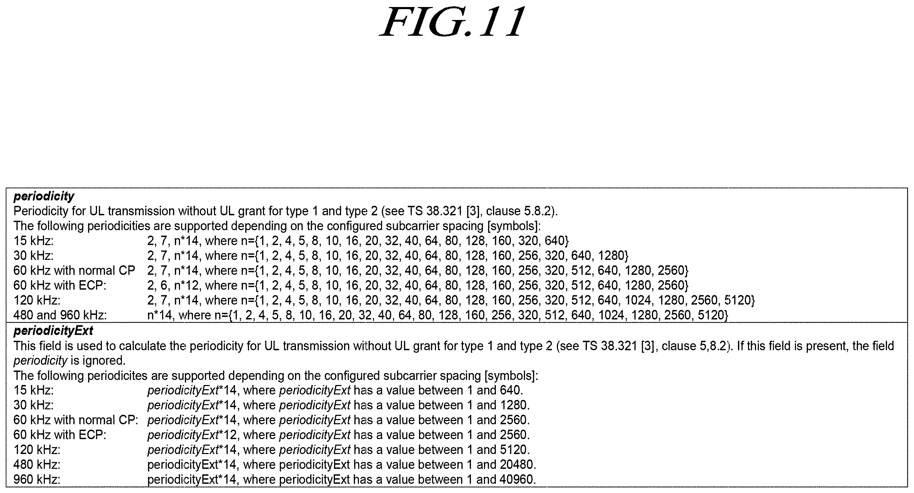

FIG. 11 is a diagram illustrating an information element included in an NR configured grant configuration.

Referring to FIG. 11, in the related art, the periodicity configuration for the configured grant configuration may be set only to the values presented in FIG. 11. For example, in the case of 15 kHz subcarrier spacing, which corresponds to 1 ms/slot, the periodicity may be set to 2/14, 7/14, or n*14/14 ms. Similarly, for 30 kHz subcarrier spacing, which corresponds to 0.5 ms/slot, the periodicity may be set to 2/14*0.5, 7/14*0.5, or n*14*0.5/14 ms. Therefore, the problem arises that the periodicity may not be set in consideration of the video frame rate may occur.

For solving this problem, a non-integer periodicity may be added to the above-described configuration value. However, to allow scheduling in slot units, the corresponding UE may transmit uplink data using the corresponding grant in the first slot that aligns with the non-integer periodicity. The corresponding grant may be used to transmit uplink data from the next slot following the slot that includes the (start) time of the non-integer periodicity.

Alternatively, the corresponding UE may transmit uplink data using the corresponding grant within the slot included in the time of the non-regular periodicity. When the UE codes information to indicate the corresponding frame rate and transmits it to the base station through L3 (e.g., RRC signaling)/L2 (e.g., MAC CE)/L1 (e.g., UCI or PUCCH), and/or when the base station receives a value indicating the frame rate (through the core network or the UE) or a value (fps) obtained by coding the corresponding frame rate, the base station may configure the same information to the UE.

For convenience of description, it is assumed that timeReferenceSFN, which is an SFN used to determine the offset of one resource in the time domain, is 0, and timeDomainOffset, which indicates the offset of one resource for the corresponding SFN in the time domain, is 0. For example, for 15kHz subcarrier spacing which corresponds to 1ms/slot, uplink data may be transmitted in/from the next first slot (17ms) arriving after the corresponding first periodicity time (16.67ms) or at/from the first symbol of the corresponding slot or indicated start symbol (e.g., the start symbol index derived from SLIV, or the start symbol specified in TS38.214, or the symbol $symbol_{start\ time}$ of the first transmission occasion of the PUSCH where the configured uplink grant is (re)initialized. Alternatively, when the first periodicity time of 16.67 ms is reached, the corresponding uplink data may be transmitted at/from the first symbol reached after the corresponding first periodicity time (16.67 ms) within the slot (16 ms) including the corresponding time.

To indicate this, the configured grant configuration information may include a new periodicity information element that is distinguished from the periodicity information element (e.g., periodicity or periodicityExt of FIG. 11) according to the conventional art. For convenience of description, a new periodicity information element is referred to as additional extended periodicity information (e.g., periodicityExt2). This naming is for descriptive purposes only and may be replaced by any other information. The corresponding information is a field used to calculate/produce uplink transmission without uplink grant for configured grant type1 and/or configured grant type2. If this field is present, the periodicity information element (e.g., periodicity and/or periodicityExt of FIG. 11) according to the conventional art may be ignored.

The information may include a value for setting a non-integer periodicity considering the frame rate. The information may be indicated by the symbol level/unit or slot level/unit (according to the configured subcarrier spacing). For example, for 15 kHz subcarrier spacing in FIG. 11, one or more values among 1000/30, 1000/60, 1000/90, and 1000/120 may be added to the n value. Similarly, in FIG. 11, for 30 kHz subcarrier spacing, one or more values among 2*1000/30, 2*1000/60, 2*1000/90, and 2*1000/120 may be added to the n value. In FIG. 11, for 60 kHz with normal CP subcarrier pacing, one or more values among 4*1000/30, 4*1000/60, 4*1000/90, and 4*1000/120 may be added to the n value. In FIG. 11, for 120 kHz subcarrier spacing, one or more values among 8*1000/30, 8*1000/60, 8*1000/90, and 8*1000/120 may be added to the n value. Alternatively, the corresponding information may be indicated at the ms level/unit (according to the configured subcarrier spacing) (30fps: 1000/30=33.33ms, 60fps: 1000/60=16.67ms, 90fps: 1000/90=11.11ms, 120fps: 1000/120=8.33ms).

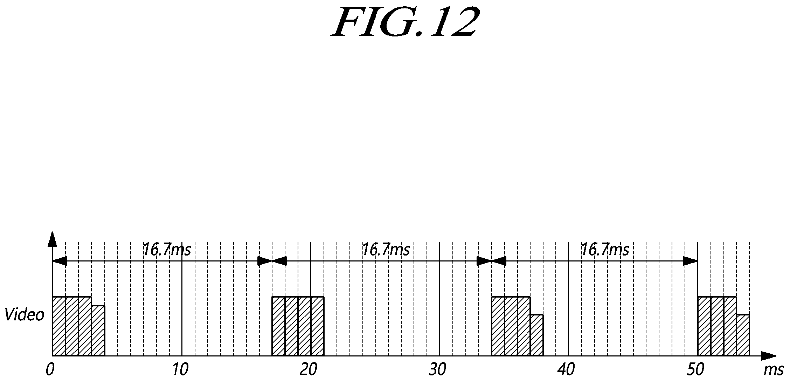

FIG. 12 is a view illustrating an uplink data processing operation according to a non-integer traffic generation period according to an embodiment.

As another example, the corresponding configuration may be indicated with an integer periodicity value close to each frame rate. To enable traffic generated at the corresponding frame rate to be transmitted, the corresponding periodicity configuration value for each frame rate may be an integer having a value larger than or equal to the traffic generation periodicity. For example, if the traffic generation periodicity has a (positive) value after the decimal point, it may be rounded up to an integer by applying a roundup function. In this case, the periodicity may be corrected by adding/subtracting an adjustment value determined for every corresponding correction periodicity or within the corresponding correction periodicity, by indicating the adjustment value and/or adjustment periodicity to correct the mismatch in traffic generation within the corresponding configured periodicity at every multiple of a specific periodicity (e.g., every Nth periodicity). For convenience of description, when a multiple of a specific periodicity for correcting the mismatch in traffic generation in the configured periodicity is referred to as the adjustment periodicity, and/or the offset for correcting the mismatch in traffic generation is referred to as the adjustment value, and/or a difference of the corresponding slot unit (or 1ms) occurs between the traffic generation time and the corresponding periodicity time in the Nth periodicity (or at (N mode adjustment periodicity)) per slot, the process of adjusting the mismatch in traffic generation by the corresponding slot/1ms is denoted as fast adjustment. This is for convenience of description and may be replaced with any other suitable term.

The configured grant configuration information may include one or more of information for indicating the adjustment periodicity, information for indicating the adjustment value, and information for indicating fast adjustment (e.g., one bit indicating True/False or On/Off). Alternatively, information for indicating the adjustment periodicity, information for indicating the adjustment value, and information for indicating fast adjustment may be configured in the UE as pre-configured values. Furthermore, the information for indicating the adjustment periodicity, information for indicating the adjustment value, and information for indicating the fast adjustment may be indicated to the UE by any of the following types of signaling: L3 (e.g., RRC signaling)/L2 (e.g., MAC CE)/L1 (e.g., DCI, PDCCH, or PDSCH). Additionally, information for activating/deactivating/switching the corresponding operation may be indicated and applied to the UE by any of the above-mentioned signaling: L3 (e.g., RRC signaling)/L2 (e.g., MAC CE)/L1 (e.g., DCI, PDCCH, or PDSCH).

For example, for 15 kHz ($\mu$=0) subcarrier pacing in FIG. 11 to support adjustable scheduling per frame rate, one or more values among 34, 17, 12, and 9 may be added to the n value. In FIG. 11, for 30 kHz ($\mu$=1) subcarrier spacing, one or more values among 2*34, 2*17, 2*12 and 2*9 may be added to the n value. In FIG. 11, for 60 kHz ($\mu$=2) with normal CP subcarrier spacing, one or more values among 4*34, 4*17, 4*12, and 4*9 may be added to the n value. In FIG. 11, for 120 kHz ($\mu$=3) subcarrier spacing, one or more values among 8*34, 8*17, 8*12 and 8*9 may be added to the n value. Alternatively, the information may be indicated in ms level/unit (depending on the configured subcarrier spacing).

The UE may consider that the Nth (Nth periodicity) uplink grant has been generated sequentially in the corresponding slot/symbol at the time of the corresponding periodicity configuration value minus the corresponding adjustment value for every corresponding adjustment periodicity. For example, for 15 kHz subcarrier pacing, the first periodicity may be generated at 34 ms, the second periodicity at (next) 34 ms, and the third periodicity at (next) 34-2 ms at the frame rate of 30. Alternatively, to reduce processing delay every periodicity, if the actual traffic generation time in each periodicity is 1ms or more earlier than (or equal to 1ms before) the periodicity start time as defined by the periodicity configuration value, it may be considered that the Nth (Nth periodicity) uplink grant is generated at the time of the corresponding periodicity minus the corresponding periodicity configuration value in the corresponding periodicity.

For example, for 15 kHz subcarrier spacing, at the frame rate of 30, the first periodicity may occur at 34 ms, the second periodicity at (next) 34-1 = 33 ms(e.g., actual traffic generation time: 2*33.33 = 66.66, periodicity start time in corresponding periodicity according to periodicity configuration value: 34+34=68, time when 66.66 is 1 ms earlier than 68 ms, 68-66.66 >= 1ms), and the third periodicity at (next) (34-1) = 33 ms (e.g., actual traffic generation time: 3*33.33=99.99, periodicity start time at corresponding periodicity according to periodicity configuration value: 34+33+34=101, 101-99.99 >= 1 ms).

For convenience of description, for 15 kHz subcarrier spacing, a frame rate of 30 is described, but it is obvious that the remaining subcarrier spacing values are also included in the scope of the embodiment. This may also be described in combination with previous embodiments. For example, it may be assumed that timeReferenceSFN=0, and timeDomainOffset= 0, and uplink data may be transmitted at/from the first start symbol or indicated start symbol (e.g., the start symbol index derived from SLIV, or the start symbol specified in TS38.214, or the symbol symbol$_{start\ time}$ of the first transmission occasion of the PUSCH where the configured uplink grant is (re)initialized) reached in the slot (34ms) including the corresponding time at the first periodicity 34ms time. Table 2 illustrates examples according to the corresponding method. As shown in Table 2, the periodicity configuration value, adjustment periodicity, and adjustment values may be shown according to the frame rate and the traffic generation periodicity.

[Table 2]

| frame rate (frame/sec) | 30 | 60 | 90 | 120 |
|---|---|---|---|---|
| traffic generation periodicity (ms) | 33.33333 | 16.66667 | 11.11111 | 8.33333 |
| period configuration value (ms) | 34 | 17 | 12 | 9 |
| difference in one periodicity (ms) | 0.66667 | 0.33333 | 0.88889 | 0.66667 |
| adjustment periodicity (period) | 3 | 3 | 9 | 3 |
| adjustment value (ms) per adjustment periodicity | 2 | 1 | 8 | 2 |
| fast adjustment value in N mod adjustment periodicity | 0,1,1 | 0,0,1 | 0,1,1,1,1,1,1,1,1 | 0,1,1 |

As an alternative example, a value closest to the traffic generation periodicity may be selected without changing/modifying each value shown in FIG. 11. Alternatively, a value larger than or closest to the traffic generation periodicity may be selected without changing/modifying each value shown in FIG. 11.

For example, for 15 kHz subcarrier spacing, the closest value to the traffic generation periodicity of 33.3333 at a frame rate of 30 is 40 or 30. If traffic is generated at the first periodicity of 40 ms (actual traffic generation 33.3333), at the second periodicity of (next) 30 ms, actual periodicity time 40+30 = 70 ms (actual traffic generation 66.66666), at the third periodicity of (next) (30) ms, actual periodicity time 40+30+30 = 100 ms (actual traffic generation 100), uplink data may be transmitted according to the traffic generation periodicity. As another example, to correct a mismatch of 6.6666 ms at the first periodicity and 3.3333 ms at the second periodicity, an indication may be made with one or more pieces of information included among adjustment periodicity 3, first adjustment value 6, second adjustment value 3, and third adjustment value 0. For convenience of description, for 15 kHz subcarrier spacing, a frame rate of 30 is described, but it is obvious that the remaining subcarrier spacing values are also included in the scope of the embodiment. Table 3 illustrates examples according to the corresponding method.

[Table 3]

| frame rate (frame/sec) | 30 | 60 | 90 | 120 |
|---|---|---|---|---|
| traffic generation periodicity (ms) | 33.33333 | 16.66667 | 11.11111 | 8.33333 |
| Nth periodicity configuration value (ms), 15kHz subcarrier spacing | 40,30,30 | 20,20,10 | 16,8,10,16,8,10,16,8,10 | 10,10,5 |
| difference in one periodicity (ms) | 6.66667, 3,33333,0 | 3.33333, 6.66667, 0 or 3.33333, 2.66667,2 | 4.8889, 1.7778, 0.6667, 5.5556, 2.4444, 1.3333, 6.2222, 3.1111, 2 | 1.66667, 3.33333,0 |
| adjustment periodicity (period) | 3 | 3 | 9 | 3 |
| adjustment value in N mod adjustment periodicity | 6,3,0 | 3,6,0 or 3,2,2 | 4,1,0,5,2,1,6,3,2 | 1,3,0 |

As another example, the Nth uplink grant may be expressed as one of the following:
After one uplink grant is configured for one configured grant type1, the MAC entity may sequentially consider the Nth (N>=0) uplink grant to occur as follows:

$$[(\text{SFN} \times \text{numberOfSlotsPerFrame} \times \text{numberOfSymbolsPerSlot}) + (\text{slot number in the frame} \times \text{numberOfSymbolsPerSlot}) + \text{symbol number in the slot}] =$$

$$(\text{timeReferenceSFN} \times \text{numberOfSlotsPerFrame} \times \text{numberOfSymbolsPerSlot} + \text{timeDomainOffset} \times \text{numberOfSymbolsPerSlot} + S + N \times \text{periodicity}) \text{ modulo } (1024 \times \text{numberOfSlotsPerFrame} \times \text{numberOfSymbolsPerSlot}).$$

After one uplink grant is configured in one configured grant type2, the MAC entity may sequentially consider the Nth (N>=0) uplink grant to occur as follows:

$$[(\text{SFN} \times \text{numberOfSlotsPerFrame} \times \text{numberOfSymbolsPerSlot}) + (\text{slot number in the frame} \times \text{numberOfSymbolsPerSlot}) + \text{symbol number in the slot}] =$$

$$[(\text{SFN}_{\text{start time}} \times \text{numberOfSlotsPerFrame} \times \text{numberOfSymbolsPerSlot} + \text{slot}_{\text{start time}} \times \text{numberOfSymbolsPerSlot} + \text{symbol}_{\text{start time}}) + N \times \text{periodicity}] \text{ modulo } (1024 \times \text{numberOfSlotsPerFrame} \times \text{numberOfSymbolsPerSlot}).$$

where $\text{SFN}_{\text{start time}}$, $\text{slot}_{\text{start time}}$, and $\text{symbol}_{\text{start time}}$ are the SFN, slot, and symbol, respectively, of the first transmission opportunity of PUSCH where the configured uplink grant was (re-)initialized.
S may be derived from SLIV or provided by startSymbol as specified in TS 38.214. The periodicity may be

1000ms/fps *$2^\mu$*numberOfSymbolsPerSlot. Alternatively, the periodicity may be the frame rate-specific periodicity configuration value. Alternatively, the periodicity may be the frame rate-specific periodicity configuration value plus/minus/less an adjustment value (or adjustment value in N mode adjustment periodicity) considering the adjustment periodicity (e.g., the periodicity at the N mode adjustment periodicity = 0 is the periodicity configuration value less the adjustment value). For example, when the frame rate 30, and the adjustment periodicity is 3 in Table 2, 1/4/7/...-th 0, 2/5/8/...-th 0, 3/6/9/...-th 2, or 1/4/7/...-th 0, 2/5/8/...-th 1, 3/6/9/...-th 1 may be applied as the corresponding adjustment value.

For example, N*periodicity=1*34-0 may be applied at N=1, N*periodicity=2*34 - 0 (or 1) at N=2, N*periodicity=3*34 - 2 (or 34+33+33-1) at N=3, N*periodicity=4*34-2-0 (or 34+33+33+34) at N=4, N*periodicity=5*34-2-0 (or 34+33+33+34+33) at N=5, and N*periodicity=6*34-2-2 (or 34+33+33+34+33+33) at N=6. It may be expressed as: N*periodicity=[N*(period configuration value)-N/rounddown integer for adjustment periodicity*adjustment value for each adjustment periodicity]. When N=5 and adjustment periodicity=3, the rounddown integer for N/adjustment periodicity of 5/3=1.667 is 1, and when N=6 and adjustment periodicity=3, the rounddown integer for N/adjustment periodicity of 6/3=2 is 2. Alternatively, when N*periodicity=Σnth periodicity value (n=1 to N), and the nth periodicity value is n mode adjustment periodicity=0, periodicity configuration value-adjustment periodicity, otherwise it may be expressed as the periodicity configuration value. Alternatively, if [Σnth periodicity value (n=1 to N-1) + periodicity configuration value - n*traffic generation periodicity] >=1, the nth period value may be expressed as periodicity configuration value-1, otherwise, the nth period value may be expressed as the periodicity configuration value.

Grouping processing for one or more CGs

It is necessary to perform efficient scheduling in consideration with the traffic characteristics of XR/media traffic.

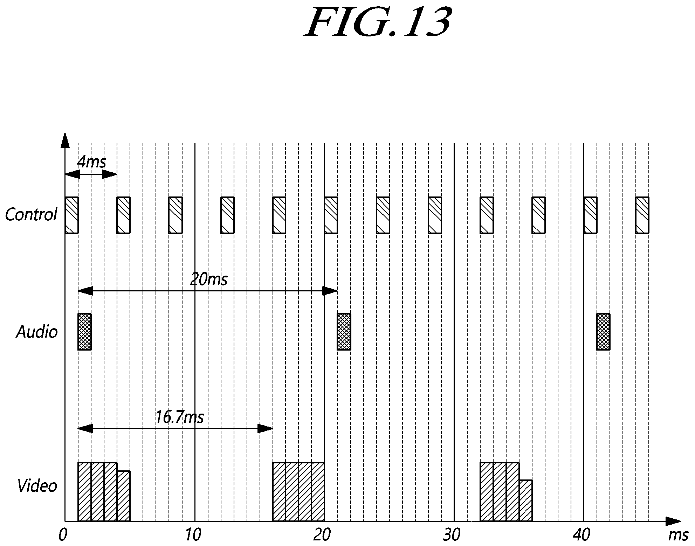

FIG. 13 is a view illustrating application traffic generation according to an embodiment.

Referring to FIG. 13, in the case of a video stream in one XR/media application, video frames having a variable size may be periodically generated according to the frame rate. Conversely, in the corresponding application, voice streams may have a variable or fixed packet size and may be generated with a specific fixed periodicity (e.g., 20 ms). Tactile/pose/control packets may be generated at a specific fixed periodicity (e.g., 4 ms) and always has a fixed packet size.

In the case of downlink traffic within the radio section between the UE and the base station, unpredictable delay or delay deviation/jitter may occur during the network transmission process. Accordingly, it may be difficult for the base station to accurately and periodically transmit the corresponding traffic to the UE. However, for uplink traffic within the radio section between the UE and the base station, there is a possibility that the UE may periodically transmit traffic with a relatively low level of change or no change at all.

One video frame included in the XR/media application may be divided into one PDU set. One video frame may be generated/transmitted/received as one or more PDUs (or a group of packets) that carry one unit of information generated at the application level through the payload. The number of segmented packets in each frame generation periodicity or the data volume to be transmitted in the corresponding periodicity may differ depending on the video frame traffic characteristics with a variable size.

Meanwhile, in the general configured grant (CG), type 1 CG is provided indicating configured uplink grant configuration information through RRC including, for example, periodicity, K repetition (repK) through K slots/subslots, offset, and PUSCH start symbol, through RRC signaling. Further, in the configured grant (CG), type 2 CG is also provided in which the periodicity and repK alone are indicated through RRC signaling, and related parameters are indicated through DCI activation. As such, two types are provided. In both dynamic grant and CG transmission, PUSCH transmission instances are not permitted to cross the slot boundary. The UE may repeatedly transmit the PUSCH in consecutively possible transmission occasions through several repetitions scheduled by uplink grant or RRC. In PUSCH repetition type A, each slot includes only one repetition and the time domain for repetitions of one TB in the slots is the same. In PUSCH repetition type B, repetitions are carried in successive minislots. Thus, one slot may include one or more repetitions of single TB.

The CG may indicate the number of consecutive PUSCHs (cg-nrofPUSCH-InSlot) configured in the CG within one slot through RRC. In the corresponding slot, SLIV may indicate an additional PUSCH appended with the same length as the first PUSCH. The CG may indicate the number of slots (cg-nrofslots) allocated in one configured grant periodicity relative to the time instance of the configured grant offset through RRC. However, in the related art, the corresponding configuration parameters were used only for PUSCH repeated transmission. For example, they were used to repeatedly transmit the same TB.

Therefore, for XR/media applications, one or more PDUs/TBs (or one PDU-Set constituted of one or more PDUs/TBs) could not be transmitted through one or more (different) PUSCHs using CG. For example, one PUSCH within one CG periodicity may not be enough to transmit PDUs/packet(s)/TB(s)/PDU-set/video frame generated according to the frame rate in XR/media applications.

Accordingly, in the disclosure, one or more PDUs may be transmitted through one or more PUSCHs using CG. For example, the base station may use one configured grant to indicate the number of consecutive slots allocated within the corresponding configured grant periodicity and to transmit one or more (different) PUSCHs through the slots.

The configured uplink grant for each TB in each slot (or where each TB is transmitted) may be used equally (or with the same value). For example, one or more parameters among timeDomainOffset, timeDomainAllocation, frequencyDomainAllocation, antennaPort, frequencyHoppingOffset, mcsAndTBS, pathlossReferenceIndex, timeReferenceSFN-r16 and pathlossReferenceIndex2-r17 may be used equally. The corresponding parameter may be indicated using cg-nrofSlots. Alternatively, to indicate transmission of different PUSCHs, the corresponding parameter may be defined and indicated as a parameter distinct from cg-nrofSlots.

As another example, the base station may indicate the number of (consecutive) PUSCHs configured in one configured grant periodicity (slot) and/or the number of consecutive slots allocated in the corresponding configured grant periodicity using one configured grant. The base station may transmit one or more PUSCHs through the consecutive PUSCHs configured in the corresponding slot and/or through the corresponding slots. The information indicating this configuration may be configured in the UE through RRC signaling.

The configured uplink grant for each TB in each slot (or where each TB is transmitted) may be used equally. For example, one or more parameters among timeDomainAllocation, frequencyDomainAllocation, antennaPort, frequencyHoppingOffset, precodingAndNumberOfLayers, mcsAndTBS, srs-ResourceIndicator, frequencyHoppingOffset, pathlossReferenceIndex and timeReferenceSFN-r16 may be equally used.

In the corresponding slot, SLIV may indicate an additional PUSCH appended with the same length as the first PUSCH. The first PUSCH allocation may follow a time domain allocation (timeDomainAllocation) parameter for type1 PUSCH transmission. For type2 PUSCH transmission, an uplink grant on DCI may be followed. The remaining PUSCH allocation may have the same length and PUSCH mapping type. The remaining PUSCH allocation may be appended according to the previous allocation without any gap. The start symbol, the length, and the PUSCH mapping type may be repeated through successively allocated slots. As another example, considering the busty characteristic of XR/media traffic, the remaining PUSCH allocation may be appended considering a gap (or configuration for indicating an offset value between PUSCHs on the time domain for indicating the same and/or slot level offset value and/or symbol level offset value in slot). The gap may be indicated through an RRC configuration and/or DCI. The corresponding gap may include a measurement gap. For the slot in which the corresponding gap is configured, the corresponding slot may be skipped and a PUSCH(s) may be allocated. Alternatively, for the slot/symbol in which the gap is configured, the remaining PUSCH allocation may be appended to the previous allocation after the gap.

As another example, the base station may transmit one or more PUSCHs using one or more (e.g., multiple) configured grants. For example, in XR/media applications, one or more (non-overlapping) configured grants for transmitting, through one or more PUSCHs, PDUs/video frame/packet(s)/PDU-Set/TB(s) generated according to the frame rate may be grouped, and one or more PUSCHs may be transmitted through the corresponding configured grants. For convenience of description, this grouping is referred to as a configured grant configurations group (CGC group). This is so done solely for clarity of description and may be replaced with another term.

The configured grants included in one CGC group may have non-overlapping time domain allocation and/or frequency domain allocation. An index/ID/identifier for identifying the corresponding CGC group may be allocated and indicated to the UE. For example, the configured grants included in one CGC group may have the same periodicity and may be configured with different (non-overlapping) time resources and/or frequency resources.

For example, for convenience of description, 15kHz subcarrier spacing is assumed, with a frame rate of 30, a traffic generation periodicity of 16.66667 ms, timeReferenceSFN = 0, 1 ms/slot. If the CGC group is configured with three configured grant configurations CG1, CG2, and CG3, each of CG1, CG2, and CG3 may be configured to have the same (e.g., 17 ms) periodicity. It may be configured with timeDomainOffset=0 of CG1, timeDomainOffset=1 of CG2, and timeDomainOffset=2 of CG3. CG1 may transmit data through each PUSCH in the first slot, CG2 in the second slot, and CG3 in the third slot.

CG1, CG2, and CG3 may equally use one or more parameters among timeDomainAllocation, frequencyDomainAllocation, antennaPort, frequencyHoppingOffset, precodingAndNumberOfLayers, mcsAndTBS, srs-ResourceIndicator, frequencyHoppingOffset and pathlossReferenceIndex, timeReferenceSFN-r16. Alternatively, CG1, CG2, and CG3 may be configured with different values for one or more parameters among timeDomainAllocation, frequencyDomainAllocation, antennaPort, frequencyHoppingOffset, precodingAndNumberOfLayers, mcsAndTBS, srs-ResourceIndicator, frequencyHoppingOffset, pathlossReferenceIndex and timeReferenceSFN-r16. A case where each CG provides an uplink grant in consecutive slots to optimize resource allocation efficiency has been described. However, it is obvious that it is also included in the scope of the disclosure if each uplink does not overlap even when the grants are allocated in non-consecutive slots.

As another example, one CGC group may be configured with a periodicity specific to the corresponding CGC group. The periodicity of the CGC group and the periodicity of each of the configured grants included in the CGC group may have the same periodicity. Alternatively, the periodicity of the CGC group and the periodicity of each of the configured grants included in the CGC group may have different periodicities. In this case, the start offset of each configured grant included in the CGC group may be set/reset according to the periodicity time of the corresponding CGC group at the start of CGC group periodicity. Additionally, every CGC group periodicity, the N value, representing the Nth uplink resource for each CG may be reset to 0.

Alternatively, each of the configured grants included in the CGC group may have the same periodicity. Alternatively, each of the configured grants included in the CGC group may have a different or independent periodicity. Alternatively, the respective periodicities of the configured grants in the CGC group may be configured with a multiple relationship therebetween. In one CGC group periodicity within the CGC group, each configured grant may have the same periodicity. Alternatively, in one CGC group periodicity within the CGC group, each configured grant may have a different or independent periodicity. Alternatively, the respective periodicities of the configured grants in one CGC group periodicity in the CGC group may be configured with a multiple relationship therebetween. Alternatively, every CGC group periodicity, in the uplink grant for each CG included in the CGC group, the Nth resource for each CG may be generated with respect to the periodicity of the corresponding CGC group. In this case, an N value for each CG may be reset to 0 for each periodicity of the CGC group and applied. As another example, the CGC group may be configured with type1 CGs. As another example, the CGC group may be configured with type 2 CGs.

If one or more CGs for type 1 or type 2 PUSCH included in the CGC group have been configured in the UE (or if a configuration of one or more CGs for type 1 or type 2 PUSCH included in the CGC group has been provided to the UE), or if one (or more) CGC group for type 1 or type 2 PUSCH has been configured in the UE (or if one (or more) CGC group for type 1 or type 2 PUSCH has been provided to the UE), activation/deactivation for the corresponding type 1 or type 2 PUSCH/CG included in the corresponding CGC group or the corresponding CGC group may be indicated using any L1/L2 signaling (e.g., using DCI). It may be indicated by including the index/ID/identifier that identifies the CGC group and/or the index/ID/identifier that identifies the CG, in the DCI. Alternatively, it may be indicated by associating, and providing the index/ID/identifier that identifies the CGC group and/or the index/ID/identifier that identifies the CG in any information field included in the DCI (e.g., Frequency domain resource assignment, Time domain resource assignment, Modulation and coding scheme, Redundancy version, HARQ process number, TPC command for scheduled PUSCH, Padding bits, or any information field defined to indicate the same). For example, activation/deactivation for the corresponding CG configuration included in the corresponding CGC group and/or the corresponding CGC group configuration may be indicated through the value of the HARQ process number field included in the DCI. Alternatively, it may be indicated through the same value provided by the index/ID/identifier that identifies the corresponding CGC group.

If one CGC group is activated, all CGs included in the corresponding CGC group may be activated. If one CGC group is deactivated/de-scheduled, all CGs included in the corresponding CGC group may be deactivated/descheduled. A dedicated DCI format for CGC group activation/deactivation/descheduling/scheduling modification may be defined. The UE may perform PDCCH validation for the corresponding DCI format. The CRC of the corresponding DCI format may be scrambled with a CS-RNTI. A new data indicator (NDI) field of the corresponding DCI format for the enabled transport block may be set to 0. If the DFI flag field is present in the corresponding DCI format, it may be set to 0. The corresponding DCI format may be set so that one or more information fields included in the DCI format are assigned a specific value. As an example, the DCI for activation may allow redundancy versions to be all set to 0. As another example, the DCI for deactivation/descheduling may allow redundancy versions to be all set to 0. Additionally, and/or modulation and coding schemes may all be set to 1. Further, and/or according to the FDRA type, the frequency domain resource assignments may all be set to 0 or 1.

The base station may transmit one or more PUSCHs using configured grants included in one CGC group. The configured uplink grant for each TB in the slot associated with each configured grant (or where each TB is transmitted) may be used equally (or with the same parameter value). For example, each configured grant may equally use one or more parameters among timeDomainAllocation, frequencyDomainAllocation, antennaPort, frequencyHoppingOffset, precodingAndNumberOfLayers, mcsAndTBS, srs-ResourceIndicator, frequencyHoppingOffset, pathlossReferenceIndex and timeReferenceSFN-r16.

The first PUSCH allocation may follow a time domain allocation (timeDomainAllocation) parameter for type 1 PUSCH transmission. For type 2 PUSCH transmission, an uplink grant on DCI may be followed. The remaining PUSCH allocation may have the same length and PUSCH mapping type. When one or more PUSCHs are transmitted using the configured grants included in one CGC group, the same parameter may be used in the configured uplink grant for each TB (or where each TB is transmitted) in the slot associated with each configured grant. In this case, it may be preferable to use the corresponding CGC group configuration as the CGC group common parameter rather than including it, as each information element, in each configured grant configuration because this approach may save bits. Therefore, the parameters that may be used identically in the configured grants included in the CGC group may be defined as common parameters and indicated to the UE. The corresponding parameter may be one or more of the above-described parameters.

As another example, the configured uplink grant for each TB (or where each TB is transmitted) in the slot associated with each configured grant may be configured and used with different parameter values. The configured grant associated with the slot arriving later on the time domain may be set to use a more conservative wireless parameter than the configured grant associated with the slot arriving first. To that end, each configured grant configuration may be configured with a different value. Alternatively, information for indicating whether each configured grant configuration included in one CGC is configured with the same value may be included. For example, if included as common configuration information, uplink transmission may be performed using common configuration information even if the corresponding parameter is not included in each configured grant configuration included in the CGC.

As another example, when transmitting one or more PUSCHs using configured grants included in one CGC group, a logical channel prioritization (LCP) procedure may be controlled by configuring a mapping configuration for the corresponding logical channel in association with the corresponding CGC group. A parameter for this may be defined and configured in the UE through the RRC. For example, a CGC group/CGC group list parameter may be defined for setting the CGC group allowed for transmission. The MAC entity may select a logical channel for each uplink grant that meets the corresponding condition when performing one new transmission. The corresponding parameter may include a CGC group index/ID/identifier associated with the uplink grant. The corresponding logical channel may be associated with PDU set-related information. The PDU set-related information may include one or more among the PDU-set identifier (information for identifying the PDU-set), PDU-set sequence number (mark), PDU-set size (or information for identifying/indicating the first and/or last SDU/PDU of one PDU-set), information for indicating that the PDU is the last PDU in the PDU-set, and PDU-set importance/priority indication information (information for indicating the importance/priority value of the corresponding PDU-set).

As another example, the base station may transmit one or more PUSCHs using one or more (e.g., multiple) configured grants. For example, in XR/media applications, one or more (including overlapping) configured grants for transmitting, through one or more PUSCHs, PDUs/video frame/packet(s)/PDU-Set/TB(s) generated according to the frame rate may be grouped, and one or more PUSCHs may be transmitted through the corresponding configured grants.

The configured grants included in one CGC group may have overlapping time domain allocation and/or frequency domain allocation. As another example, each configured grant included in one CGC group may transmit a different TB size. For example, when the CGC group is configured with three configured grant configurations (CG1, CG2, and CG3), the TB size transmittable by CG2 may be larger than the TB size transmittable by CG1, and the TB size transmittable by CG3 may be larger than the TB size transmittable by CG2. Additionally, CG1, CG2, and CG3 may overlap each other in frequency domain resource assignment and/or time domain resource assignment.

As another example, each configured grant included in one CGC group may be configured with a different number of slots. For example, when the corresponding CGC group is configured with three configured grant configurations (CG1, CG2, and CG3), CG1 may be indicated by being allocated one slot in one CGC periodicity, CG2 with two slots, and CG3 with three slots. The slots included in CG1, CG2, and CG3 may overlap. For example, the three slots allocated to CG3 may be consecutive slots, and the slot first arriving for CG3 on the time domain may be identical to the slot allocated to CG1 and/or the first arriving slot allocated to CG2 and the slot second arriving for CG3 may be identical to the second arriving slot allocated to CG2.

As another example, one CGC group may be configured with a periodicity of the corresponding CGC group. The periodicity of the CGC group and the periodicity of each configured grant included in the CGC group may have the same periodicity. Alternatively, the periodicity of the CGC group and the periodicity of each configured grant included in the CGC group have different periodicities, and the start offset of each configured grant included in the CGC group may be set according to the periodicity time of the corresponding CGC group. And/or, in every CGC group periodicity, the N value indicating the Nth uplink resource for each CG may be reset to 0. Alternatively, each of the configured grants included in the CGC group may have the same periodicity. Alternatively, each of the configured grants included in the CGC group may have a different or independent periodicity. Alternatively, the respective periodicities of the configured grants in the CGC group may be configured with a multiple relationship. In one CGC group periodicity within the CGC group, each configured grant may have the same periodicity. Alternatively, in one periodicity of the CGC group within the CGC group, each configured grant may have a different or independent periodicity. Alternatively, the respective periodicities of the configured grants in one CGC group periodicity in the CGC group may be configured to have a multiple relationship. Alternatively, every CGC group periodicity, the uplink grant for each CG included in the CGC group may allow the Nth resource for each CG to be generated based on the corresponding CGC group periodicity, and the N value for each CG to be reset and applied for every CGC group periodicity. As another example, the CGC group may be configured with type 1 CGs. As another example, the CGC group may be configured with type 2 CGs.

If one or more CGs for type1 or type2 PUSCH included in the CGC group have been configured in the UE (or if a configuration of one or more CGs for type 1 or type2 PUSCH included in the CGC group has been provided to the UE), or if one (or more) CGC group for type1 or type2 PUSCH has been configured in the UE (or if one (or more) CGC group for type1 or type2 PUSCH has been provided to the UE), activation/deactivation for the corresponding type1 or type2 PUSCH/CG included in the corresponding CGC group or the corresponding CGC group may be indicated using any L1/L2 signaling (e.g., using DCI). It may be indicated by including the index/ID/identifier for identifying the CGC group and/or the index/ID/identifier for identifying the CG, in the DCI. Alternatively, it may be indicated by associating and providing the index/ID/identifier for identifying the CGC group and/or the index/ID/identifier for identifying the CG in any information field included in the DCI (e.g., Frequency domain resource assignment, Time domain resource assignment, Modulation and coding scheme, Redundancy version, HARQ process number, TPC command for scheduled PUSCH, Padding bits, or any information field defined to indicate the same). For example, activation/deactivation for the corresponding CG configuration included in the corresponding CGC group and/or the corresponding CGC group configuration may be indicated through the value of the HARQ process number field included in the DCI. Alternatively, it may be indicated through the same value provided by the index/ID/identifier for identifying the corresponding CGC group.

If one CGC group is activated, only one of the CGs included in the corresponding CGC group may be activated. Alternatively, if one CGC group is activated, and if there are overlapping CGs included in the corresponding CGC group, only one CG among the overlapping CGs may be activated. In another case, if one CGC group is activated, one or more (at least one) CGs included in the corresponding CGC group may be activated. If one CGC group may be similarly deactivated/descheduled, the CG(s) included in the corresponding CGC group may be deactivated/descheduled. A DCI format for CGC group activation/deactivation/descheduling/scheduling modification may be defined. The UE may perform PDCCH validation for the corresponding DCI format. The CRC of the corresponding DCI format may be scrambled with a CS-RNTI. Additionally, new data indicator (NDI) field of the corresponding DCI format for the enabled transport block may be set to 0. If the DFI flag field is present in the corresponding DCI format, it may be set to 0. The corresponding DCI format may be set so that one or more information fields included in the DCI format have a specific value. As an example, the DCI for activation may allow redundancy versions to be all set to 0. Similarly, the DCI for deactivation/descheduling may allow redundancy versions to be all set to 0. Additionally, modulation and coding schemes may all be set to 1. Furthermore, according to the FDRA type, the frequency domain resource assignments may all be set to 0 or 1.

The base station may transmit one or more PUSCHs using one or more configured grant(s) included in one CGC group. The uplink grant parameter for each TB (or where each TB is transmitted) in the slot associated with the corresponding configured grant may be equally used. For example, each configured grant may equally use one or more parameters among timeDomainAllocation, frequencyDomainAllocation, antennaPort, frequencyHoppingOffset, precodingAndNumberOfLayers, mcsAndTBS, srs-ResourceIndicator, frequencyHoppingOffset, pathlossReferenceIndex and timeReferenceSFN-r16.

The first PUSCH allocation may follow a time domain allocation (timeDomainAllocation) parameter for type 1 PUSCH transmission. For type 2 PUSCH transmission, an uplink grant on the DCI may be followed. The remaining PUSCH allocation may have the same length and PUSCH mapping type. When one or more PUSCHs are transmitted using one or more configured grant(s) included in one CGC group, the same parameter may be used in the uplink grant for each TB (or where each TB is transmitted) in the slot associated with the corresponding configured grant . In this case, it may be preferable to use the corresponding CGC group configuration as the CGC group common parameter rather than including it, as each information element, in each configured grant configuration because this approach may save bits. Therefore, the parameters that may be used identically in the configured grants included in the CGC group may be defined as common parameters and indicated to the UE. The corresponding parameter may be one or more of the above-described parameters.

As another example, the configured uplink grant for each TB (or where each TB is transmitted) in the slot associated with each configured grant may be configured and used with different parameter values. The configured grant associated with the slot arriving later in the time domain may be set to use a more conservative wireless parameter than the configured grant associated with the slot arriving first. To that end, each configured grant configuration may be configured with a different value. Alternatively, information for indicating whether each configured grant configuration included in one CGC is configured with the same value may be included. For example, if included as common configuration information, uplink transmission may be performed using common configuration information even if the corresponding parameter is not included in each configured grant configuration included in the CGC.

As another example, when transmitting one or more PUSCHs using configured grants included in one CGC group, an LCP procedure may be controlled by configuring a mapping configuration for the corresponding logical channel in association with the corresponding CGC group. A parameter for this may be defined and configured in the UE through the RRC signaling. For example, a CGC group/CGC group list parameter may be defined for setting the CGC group allowed for transmission. The MAC entity may select a logical channel for each uplink grant that meets the corresponding condition when performing a new transmission. The corresponding parameter may include a CGC group index/ID/identifier associated with the uplink grant.

When the UE is scheduled to transmit one transport block (TB), or when the UE is scheduled to transmit one TB on PUSCH by one DCI, m which is the time domain resource assignment field value of the DCI provides one row index m+1 for the allocated table. The indexed row provides the slot offset K2, the start and length indicator SLIV, or directly, start symbol S and allocated length L, PUSCH mapping type, and the number of repetitions.

As another example, in any embodiment described above, one configured grant may include uplink grant information for scheduling one or more PUSCHs. For example, the number of consecutive PUSCHs configured in the corresponding slot and/or the number of consecutive slots allocated in one configured grant periodicity may be indicated, and one or more PUSCHs may be transmitted through the PUSCHs configured in the corresponding slots. As another example, the UE may be configured with information for indicating the time domain allocation (or time domain resource allocation. For convenience of description, it is denoted as time domain allocation, but may indicate the same parameter) for the plurality of PUSCHs in one configured grant periodicity.

The plurality of time domain allocations may include a row including one or more pieces of information among one K2, start and length indicator SLIV, or directly, start symbol S and allocated length L, PUSCH mapping type and the number of repetitions, for PUSCH(s) on one uplink BWP of one serving cell. Alternatively, the plurality of time domain allocations may include a row(s) including one or more pieces of information among one or more K2(s), start and length indicator(s) SLIV(s), or directly, start symbol S(s) and allocated length L(s), PUSCH mapping type(s) and the number(s) of repetitions, for PUSCH(s) on one uplink BWP of one serving cell. It may include one row including one or more pieces of information among K2, start and length indicator SLIV, or directly, start symbol S and allocated length L, PUSCH mapping type and the number of repetitions, for each PUSCH.

As another example, K2 may indicate the slot in which the UE is to transmit the first PUSCH of the plurality of PUSCHs. Each PUSCH may have one individual SLIV and mapping type. The number of PUSCHs scheduled may be signaled by the number of valid SLIVs indicated in the row of the plurality of time domain allocations signaled via DCI. As another example, each K2 may indicate the slot in which the UE is to transmit the Nth PUSCH of the plurality of PUSCHs. Each PUSCH may have one identical/shared SLIV and mapping type. The number of PUSCHs scheduled may be signaled by the number of valid K2s indicated in the row of the plurality of time domain allocations signaled via DCI. As another example, each K2 may indicate the slot in which the UE is to transmit the Nth PUSCH of the plurality of PUSCHs. Each PUSCH may have one individual SLIV and mapping type. The number of PUSCHs scheduled may be signaled by the number of valid K2s and/or the number of SLIVs indicated in the row of the plurality of time domain allocations signaled via DCI. As another example, information (slot level offset value and/or symbol level offset value in slot) for indicating the offset value between PUSCHs on the time domain for a plurality of time domain allocations signaled through DCI may be indicated. An offset value of the number of PUSCHs-1 may be indicated.

As another example, when time domain allocation for the plurality of PDSCHs in one configured grant periodicity is indicated, the UE may not apply repetition on the uplink BWP of the serving cell. For example, pusch-aggregationfactor which indicates the number of repetitions used for dynamic scheduling may not be applied. The UE applies 1 if the corresponding field is absent. As another example, repK which indicates the number of repetitions used in configured scheduling may be set to a value (e.g., 2, 4, or 8) of two or more to prevent application of repetition. The base station may set repK which indicates the number of repetitions only to 1 and apply the same. Further, the UE may not be expected to be configured with the number of repetitions. If the base station indicates the number of repetitions to be two or more, the UE may disregard it.

Alternatively, when time domain allocation for the plurality of PDSCHs in one configured grant periodicity is indicated, and when the UE is configured with the number of repetitions, the UE may apply pusch-aggregation-factor using the corresponding parameter on the uplink BWP of the serving cell. For example, when the number of repetitions is indicated as2, the UE may perform repeated transmission on a plurality of PDSCHs in the next periodicity of the corresponding configured grant periodicity. Additionally, when the number of repetitions is indicated as 2, the UE may perform repeated transmission in units of consecutive two slots over the corresponding configured grant periodicity and/or next periodicity. Furthermore, when the number of repetitions is indicated as 2, the UE may repeatedly transmit one PDSCH twice in one slot over the corresponding configured grant periodicity and/or next periodicity. Information for indicating the same may be indicated to the UE by the base station.

Scheduling considering data variability in CG group transmission

The number of segmented packets in each frame generation periodicity or the data volume to be transmitted in the corresponding periodicity may differ depending on the XR/media/video frame traffic characteristics with a variable size.

For example, the UE may transmit one or more PUSCHs using one CGC group and/or one or more configured grants. In this case, if the uplink grant(s) configured/allocated for transmission of TBs/PUSCHs may not transmit/accept the corresponding PDU-set or PDUs/packets included in the corresponding PDU-set or PDUs/packets/uplink data/UL-SCH-resources/pending data available for transmission in the periodicity of the corresponding CGC group and/or the corresponding one or more configured grant periodicity(ies), the UE may indicate, to the base station, the periodicity of the corresponding CGC group and/or whether there is additional data volume/buffer size/PDUs/TB(s)/uplink grant/data to be transmitted in the corresponding configured grants.

The corresponding information may be indicated from the UE to the base station through any L3 (e.g., RRC signaling)/L2 (e.g., MAC CE, SR, BSR)/L1 (e.g., UCI, PUCCH, or PUSCH) signaling. The base station may allow the UE to transmit the corresponding data to the base station through dynamic scheduling. Additionally, the corresponding state may be added as an SR/BSR trigger condition for any SR/BSR (e.g., one or more of SR associated with the corresponding logical channel, SR associated with the corresponding PDU-set, regular, periodic, padding, short, long, extended short, extended long, short truncated, and long truncated)

As another example, the UE may transmit one or more PUSCHs using one CGC group and/or one or more configured grants. In this case, if the uplink grant(s) configured/allocated for transmission of TBs/PUSCHs may transmit/accept (and/or when the MAC PDU including the corresponding BSR is built, when the corresponding LCG has data available for transmission) the corresponding PDU-set or PDUs/packets included in the corresponding PDU-set or PDUs/packets/uplink data/UL-SCH-resources/pending data available for transmission to be transmitted in the corresponding periodicity, in the periodicity of the corresponding CGC group and/or in the corresponding one or more configured grant periodicity(ies), the UE may indicate, to the base station, one or more pieces of information among the number of PUSCHs, number of uplink time domain allocations, number of slots, whether data is receivable, and whether there is additional data, transmittable/available through the corresponding configured grants and/or in the periodicity of the corresponding CGC group.

The corresponding information may be indicated from the UE to the base station through any L3 (e.g., RRC signaling)/L2 (e.g., MAC CE, SR, BSR)/L1 (e.g., SR, UCI, PUCCH, or PUSCH) signaling. The base station may not expect to transmit/receive uplink data for the corresponding time domain allocation. Alternatively, the base station may indicate, to the UE, any L3 (e.g., RRC signaling)/L2 (e.g., MAC CE)/L1 (e.g., DCI, PDCCH, or PDSCH) signaling, for canceling the uplink grant for the corresponding radio resource for the corresponding time domain allocation. The UE may transmit nothing on the remaining time domain resource configured by the corresponding configured grants configuration and/or the periodicity of the corresponding CGC group. The UE may consider that the uplink grant on the remaining time domain resource configured by the corresponding configured grants configuration and/or the periodicity of the corresponding CGC group has been canceled. If the transport block to be transmitted on the resource allocated for the corresponding configured grant (uplink transmission without grant) at the higher layers of L2 or more is not transferred, the UE may transmit nothing on the resource configured by the corresponding configured grant configuration.

According to the embodiments described above, data may be effectively processed while considering the XR/media data characteristics at the MAC layer.

Hereinafter, hardware and software configuration of a UE and a base station capable of performing some or all of the above-described embodiments will be described with reference to the drawings.

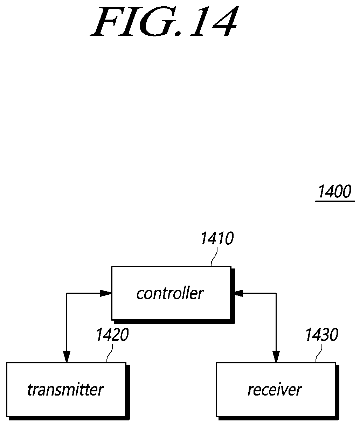

FIG. 14 is a block diagram illustrating a UE according to an embodiment.

Referring to FIG. 14, a UE 1400 transmitting uplink data may include a receiver 1430 receiving, from a base station, CG configuration information for transmitting a plurality of physical uplink shared channels (PUSCHs) in a single configured grant (CG) period, a controller 1410 identifying uplink grant information based on at least one of i) the CG configuration information and ii) L1 signaling, and a transmitter 1420 transmitting the plurality of PUSCHs in the single CG period based on the uplink grant information.

According to an embodiment, the CG configuration information may include information for allocating a radio resource to transmit a plurality of PUSCHs in a single CG period. According to another embodiment, the CG configuration information may include CG period information.

For example, the CG configuration information may include at least one of i) information about the number of consecutive slots configured to transmit the plurality of PUSCHs in the single CG period, ii) information about the number of PUSCHs configured to transmit the plurality of PUSCHs in the single CG period, and ii) a start symbol and length information for a first PUSCH in the uplink grant. Further, the CG configuration information may further include at least one of CG period information, frequency resource information, MCS information, transport block size information, antenna port information, frequency hopping offset information for uplink signal transmission, time reference SFN information, and pathloss index-related information.

The configuration information may be transferred through higher layer signaling. For example, the CG configuration information may be included in the RRC message and transmitted to the UE. For example, the CG configuration information may be included in an RRC reconfiguration message. Alternatively, the CG configuration information may be included in PUSCH configuration information. The PUSCH configuration information may also be included in the RRC reconfiguration message.

The controller 1410 may identify the uplink grant of the CG method through CG configuration information and/or L1 signaling. For example, the controller 1410 may be allocated two types of uplink grants for transmitting a plurality of PUSCHs in single CG periodicity. For example, the controller 1410 may be allocated an uplink grant based on CG configuration information. This case may be classified as type 1. As another example, the controller 1410 may be allocated an uplink grant based on CG configuration information and L1 signaling. This case may be classified as type 2.

Meanwhile, the uplink grant may be identified based on at least one of i) information about the number of consecutive slots configured to transmit the plurality of PUSCHs in the single CG period, ii) information about the number of PUSCHs configured to transmit the plurality of PUSCHs in the single CG period, and iii) a start symbol and length information for a first PUSCH in the uplink grant.

According to an embodiment, the CG configuration information may include all of i) the information about the number of consecutive slots configured to transmit the plurality of PUSCHs in the single CG period, ii) the information about the number of PUSCHs configured to transmit the plurality of PUSCHs in the single CG period, and iii) the start symbol and length information for the first PUSCH in the uplink grant. In this case, the controller 1410 may identify the uplink grant for transmission of the plurality of PUSCHs in a single CG period using only the CG configuration information through the type 1 method.

According to another embodiment, the CG configuration information may include i) the information about the number of consecutive slots configured to transmit the plurality of PUSCHs in the single CG period and ii) the information about the number of PUSCHs configured to transmit the plurality of PUSCHs in the single CG period may be included in, and L1 signaling may include the start symbol and length information for the first PUSCH in the uplink grant. In this case, the controller 1410 may identify the uplink grant for transmission of the plurality of PUSCHs in single CG period using both the CG configuration information and L1 signaling through the type 2 method.

Only information related to the time domain radio resource has been described as an example, but information necessary for signal transmission such as the above-described MCS or the frequency domain radio resource may also be included. For example, the controller 1410 may identify all of parameters necessary for transmitting a plurality of PUSCHs in a single CG periodicity through CG configuration information. Alternatively, the controller 1410 may identify the parameters necessary for transmitting the plurality of PUSCHs in a single CG periodicity through CG configuration information and L1 signaling. In this case, the parameters may be distributed to the CG configuration information and L1 signaling in any combination.

L1 signaling may refer to information received through downlink control information (DCI), MAC CE, or PDSCH received through the PDCCH. L1 signaling may include activation indication information for activating any one of parameter sets allocated to the UE through the CG configuration information. For example, the DCI or MAC CE may include activation indication information for activating the CG configuration information.

The information about the number of consecutive slots configured to transmit the plurality of PUSCHs in the single CG period and the information about the number of PUSCHs configured to transmit the plurality of PUSCHs in the single CG period may be configured as parameters which are distinguished from information about the number of slots allocated in a single CG period following a time instance of a CG offset and a number of consecutive PUSCHs configured in a CG in one slot.

The transmitter 1420 may transmit, to the base station, the uplink data channel through the PUSCH radio resource identified through type 1 or type 2 as described above.

For example, the plurality of PUSCHs transmitted according to the uplink grant may have one or more parameters set to be the same among frequency domain resource allocation (FDRA), modulation and coding scheme (MCS), transport block size (TBS), antenna port, frequency hopping offset (frequencyHoppingOffset), pathloss reference index (pathlossReferenceIndex), time reference SFN (timeReferenceSFN), and pathloss reference index 2 (pathlossReferenceIndex2). In other words, some or all of the parameters of the uplink grant for transmission of the plurality of PUSCHs allocated in one period may be configured to be the same for each PUSCH.

However, as described above, the uplink grant may be configured not to support repeated transmission. For example, the plurality of PUSCHs transmitted in one CG period may include different transport blocks (TBs).

Besides, the controller 1410 controls the overall operation of the UE 1400 according to the uplink data transmission necessary to perform the disclosure described above.

The transmitter 1420 and the receiver 1430 are used to transmit or receive signals or messages or data necessary for performing the above-described disclosure, with the base station or core network entity.

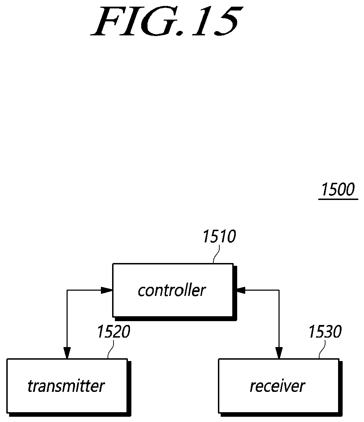

FIG. 15 is a block diagram illustrating a configuration of a base station according to an embodiment.

Referring to FIG. 15, a base station 1500 receiving uplink data may include a transmitter 1520 transmitting, to a UE, CG configuration information for transmitting a plurality of physical uplink shared channels (PUSCHs) within a single configured grant (CG) and a receiver 1530 receiving the plurality of PUSCHs within the single CG based on uplink grant information identified based on at least one of the CG configuration information and L1 signaling.

The controller 1510 may generate CG configuration information for configuring a CG in the UE. For example, the CG configuration information may include information for allocating a radio resource to transmit a plurality of PUSCHs in a single CG period. As another example, the CG configuration information may include CG period information.

According to an embodiment, the CG configuration information may include at least one of i) information about the number of consecutive slots configured to transmit the plurality of PUSCHs in the single CG period, ii) information about the number of PUSCHs configured to transmit the plurality of PUSCHs in the single CG period, and iii) a start symbol and length information for a first PUSCH in the uplink grant. Further, the CG configuration information may further include at least one of CG period information, frequency resource information, MCS information, transport block size information, antenna port information, frequency hopping offset information for uplink signal transmission, time reference SFN information, and pathloss index-related information.

The configuration information may be transferred through higher layer signaling. For example, the CG configuration information may be included in the RRC message and transmitted to the UE. For example, the CG configuration information may be included in an RRC reconfiguration message. Alternatively, the CG configuration information may be included in PUSCH configuration information. The PUSCH configuration information may also be included in the RRC reconfiguration message.

The UE may identify uplink grant information based on at least one of the CG configuration information and L1 signaling. The uplink grant may be identified based on at least one of i) information about the number of consecutive slots configured to transmit the plurality of PUSCHs within the single CG period, ii) information about the number of PUSCHs configured to transmit the plurality of PUSCHs within the single CG period, and iii) a start symbol and length information for a first PUSCH in the uplink grant.

According to an embodiment, the CG configuration information may include all of i) the information about the number of consecutive slots configured to transmit the plurality of PUSCHs within the single CG period, ii) the information about the number of PUSCHs configured to transmit the plurality of PUSCHs within the single CG period, and iii) the start symbol and length information for the first PUSCH in the uplink grant may be included in the CG configuration information. In this case, the UE may identify the uplink grant for transmission of the plurality of PUSCHs in one CG period using only the CG configuration information.

According to another embodiment, the CG configuration information may include i) the information about the number of consecutive slots configured to transmit the plurality of PUSCHs within the single CG period and ii) the information about the number of PUSCHs configured to transmit the plurality of PUSCHs within the single CG period, and L1 signaling may include iii) the start symbol and length information for the first PUSCH in the uplink grant. In this case, the UE may identify the uplink grant for transmission of the plurality of PUSCHs in one CG period using both the CG configuration information and L1 signaling.

The transmitter 1520 may transmit L1 signaling to the UE. The transmitter 1520 may control whether to activate the CG configuration information configured in the UE by transmitting L1 signaling after transmitting the CG configuration information. Further, L1 signaling may further include parameters required to identify the uplink grant.

L1 signaling may refer to, e.g., information received through downlink control information (DCI), MAC CE, or PDSCH received through the PDCCH. L1 signaling may include activation indication information for activating any one of parameter sets allocated to the UE through the CG configuration information. For example, the DCI or MAC CE may include activation indication information for activating the CG configuration information.

Meanwhile, i) the information about the number of consecutive slots configured to transmit the plurality of PUSCHs within the single CG period and ii) the information about the number of PUSCHs configured to transmit the plurality of PUSCHs within the single CG period may be configured as parameters distinguished from information about the number of slots allocated in one CG period following a time instance of a CG offset and a number of consecutive PUSCHs configured in a CG in one slot. For example, the parameters included in the CG configuration information configured to transmit the plurality of PUSCHs within a single CG period in the present embodiment may be distinguished from the parameters of the CG configuration information following the time instance of the CG offset.

The receiver 1530 may receive an uplink data channel through a PUSCH radio resource.

For example, the plurality of PUSCHs transmitted according to the uplink grant may have one or more parameters set to be the same among frequency domain resource allocation (FDRA), modulation and coding scheme (MCS), transport block size (TBS), antenna port, frequency hopping offset (frequencyHoppingOffset), pathloss reference index (pathlossReferenceIndex), time reference SFN (timeReferenceSFN), and pathloss reference index 2 (pathlossReferenceIndex2). In other words, some or all of the parameters of the uplink grant for transmission of the plurality of PUSCHs allocated within a single period may be configured to be the same for each PUSCH.

However, as described above, the uplink grant may be configured not to support repeated transmission. For example, the plurality of PUSCHs transmitted in one CG period may include different transport blocks (TBs).

Besides, the controller 1510 controls the overall operation of the base station 1500 according to the uplink data transmission necessary to perform the disclosure described above.

The transmitter 1520 and the receiver 1530 are used to transmit or receive signals or messages or data necessary for performing the above-described disclosure, with the UE or core network entity.

The above-described embodiments may be supported by the standard documents disclosed in IEEE 802, 3GPP, and 3GPP2 which are radio access systems. In other words, steps, components, and parts not described to clarify the technical spirit in the embodiments may be supported by the above-described standard documents. Further, all the terms disclosed in the disclosure may be described by the standard documents disclosed above.

The present embodiments described above may be implemented through various means. For example, the present embodiments may be implemented by various means, e.g., hardware, firmware, software, or a combination thereof.

When implemented in hardware, the method according to the present embodiments may be implemented by, e.g., one or more application specific integrated circuits (ASICs), digital signal processors (DSPs), digital signal processing devices (DSPDs), programmable logic devices (PLDs), field programmable gate arrays (FPGAs), processors, controllers, micro-controllers, or micro-processors.

When implemented in firmware or hardware, the method according to the present embodiments may be implemented in the form of a device, procedure, or function performing the above-described functions or operations. The software code may be stored in a memory unit and driven by a processor. The memory unit may be positioned inside or outside the processor to exchange data with the processor by various known means.

The above-described terms, such as "system," "processor," "controller," "component," "module," "interface," "model," or "unit," described above may generally refer to computer-related entity hardware, a combination of hardware and software, software, or software being executed. For example, the above-described components may be, but are not limited to, processes driven by a processor, processors, controllers, control processors, entities, execution threads, programs, and/or computers. For example, both an application being executed by a controller or a processor and the controller or the processor may be the components. One or more components may reside within a process and/or thread of execution, and the components may be positioned in one device (e.g., a system, a computing device, etc.) or distributed in two or more devices.

The above-described embodiments are merely examples, and it will be appreciated by one of ordinary skill in the art various changes may be made thereto without departing from the scope of the present invention. Accordingly, the embodiments set forth herein are provided for illustrative purposes, but not to limit the scope of the present invention, and should be appreciated that the scope of the present invention is not limited by the embodiments. The scope of the disclosure should be construed by the following claims, and all technical spirits within equivalents thereof should be interpreted to belong to the scope of the disclosure.

**CROSS-REFERENCE TO RELATED APPLICATION**

The instant patent application claims priority under 35 U.S.C. 119(a) to Korean Patent Application Nos. 10-2022-0088807 and 10-2023-0088926, filed on July 19, 2022 and July 10, 2023, respectively, in the Korean Intellectual Property Office, the disclosures of which are herein incorporated by reference in their entireties. The present patent application claims priority to other applications to be filed in other countries, the disclosures of which are also incorporated by reference herein in their entireties.

**Claims**

1. A method for transmitting uplink data by a UE, the method comprising:

   receiving, from a base station, CG configuration information for transmitting a plurality of physical uplink shared channels (PUSCHs) in one configured grant (CG) period;
   identifying uplink grant information based on at least one of the CG configuration information and L1 signaling; and
   transmitting the plurality of PUSCHs in the one CG period based on the uplink grant information.

2. The method of claim 1, wherein the uplink grant is identified based on at least one of information about a number of consecutive slots configured to transmit the plurality of PUSCHs in the one CG period, information about a number of PUSCHs configured to transmit the plurality of PUSCHs in the one CG period, and a start symbol and length information for a first PUSCH in the uplink grant.

3. The method of claim 2, wherein the information about the number of consecutive slots configured to transmit the plurality of PUSCHs in the one CG period, the information about the number of PUSCHs configured to transmit the plurality of PUSCHs in the one CG period, and the start symbol and length information for the first PUSCH in the uplink grant are included in the CG configuration information.

4. The method of claim 2, wherein the information about the number of consecutive slots configured to transmit the plurality of PUSCHs in the one CG period and the information about the number of PUSCHs configured to transmit the plurality of PUSCHs in the one CG period are included in the CG configuration information, and
   wherein the start symbol and length information for the first PUSCH in the uplink grant are included in the L1 signaling.

5. The method of claim 2, wherein the information about the number of consecutive slots configured to transmit the plurality of PUSCHs in the one CG period and the information about the number of PUSCHs configured to transmit the plurality of PUSCHs in the one CG period are configured as parameters distinguished from information about a number of slots allocated in one CG period following a time instance of a CG offset and a number of consecutive PUSCHs configured in a CG in one slot.

6. The method of claim 1, wherein the plurality of PUSCHs transmitted according to the uplink grant have one or more parameters set to be the same among frequency domain resource allocation (FDRA), modulation and coding scheme (MCS), transport block size (TBS), antenna port, frequency hopping offset (frequencyHoppingOffset), pathloss reference index (pathlossReferenceIndex), time reference SFN (timeReferenceSFN), and pathloss reference index 2 (pathlossReferenceIndex2).

7. The method of claim 1, wherein the uplink grant is configured not to support repeated transmission.

8. A method for receiving uplink data by a base station, the method comprising:

transmitting, to a UE, CG configuration information for transmitting a plurality of physical uplink shared channels (PUSCHs) in one configured grant (CG) period; and
receiving the plurality of PUSCHs in the one CG period based on uplink grant information identified based on at least one of the CG configuration information and L1 signaling.

9. The method of claim 8, wherein the uplink grant is identified based on at least one of information about a number of consecutive slots configured to transmit the plurality of PUSCHs in the one CG period, information about a number of PUSCHs configured to transmit the plurality of PUSCHs in the one CG period, and a start symbol and length information for a first PUSCH in the uplink grant.

10. The method of claim 9, wherein the information about the number of consecutive slots configured to transmit the plurality of PUSCHs in the one CG period, the information about the number of PUSCHs configured to transmit the plurality of PUSCHs in the one CG period, and the start symbol and length information for the first PUSCH in the uplink grant are included in the CG configuration information.

11. The method of claim 9, wherein the information about the number of consecutive slots configured to transmit the plurality of PUSCHs in the one CG period and the information about the number of PUSCHs configured to transmit the plurality of PUSCHs in the one CG period are included in the CG configuration information, and
wherein the start symbol and length information for the first PUSCH in the uplink grant are included in the L1 signaling.

12. The method of claim 8, wherein the plurality of PUSCHs received according to the uplink grant have one or more parameters set to be the same among frequency domain resource allocation (FDRA), modulation and coding scheme (MCS), transport block size (TBS), antenna port, frequency hopping offset (frequencyHoppingOffset), pathloss reference index (pathlossReferenceIndex), time reference SFN (timeReferenceSFN), and pathloss reference index 2 (pathlossReferenceIndex2).

13. A UE transmitting uplink data, comprising:

a receiver receiving, from a base station, CG configuration information for transmitting a plurality of physical uplink shared channels (PUSCHs) in one configured grant (CG) period;
a controller identifying uplink grant information based on at least one of the CG configuration information and L1 signaling; and
a transmitter transmitting the plurality of PUSCHs in the one CG period based on the uplink grant information.

14. The UE of claim 13, wherein the uplink grant is identified based on at least one of information about a number of consecutive slots configured to transmit the plurality of PUSCHs in the one CG period, information about a number of PUSCHs configured to transmit the plurality of PUSCHs in the one CG period, and a start symbol and length information for a first PUSCH in the uplink grant.

15. The UE of claim 14, wherein the information about the number of consecutive slots configured to transmit the plurality of PUSCHs in the one CG period, the information about the number of PUSCHs configured to transmit the plurality of PUSCHs in the one CG period, and the start symbol and length information for the first PUSCH in the uplink grant are included in the CG configuration information.

16. The UE of claim 14, wherein the information about the number of consecutive slots configured to transmit the plurality of PUSCHs in the one CG period and the information about the number of PUSCHs configured to transmit the plurality of PUSCHs in the one CG period are included in the CG configuration information, and
wherein the start symbol and length information for the first PUSCH in the uplink grant are included in the L1 signaling.

17. The UE of claim 14, wherein the information about the number of consecutive slots configured to transmit the plurality of PUSCHs in the one CG period and the information about the number of PUSCHs configured to transmit the plurality of PUSCHs in the one CG period are configured as parameters distinguished from information about a number of slots allocated in one CG period following a time instance of a CG offset and a number of consecutive PUSCHs configured in a CG in one slot.

18. The UE of claim 13, wherein the plurality of PUSCHs transmitted according to the uplink grant have one or more parameters set to be the same among frequency domain resource allocation (FDRA), modulation and coding scheme (MCS), transport block size (TBS), antenna port, frequency hopping offset (frequencyHoppingOffset), pathloss reference index (pathlossReferenceIndex), time reference SFN (timeReferenceSFN), and pathloss reference index 2 (pathlossReferenceIndex2).

19. The UE of claim 13, wherein the uplink grant is configured not to support repeated transmission.

# FIG.1

# *FIG.2*

One frame, $T_{frame}$ = 10ms

One subframe, $T_{subframe}$ = 1ms

| #0 | #1 | #2 | #3 | #4 | #5 | #6 | #7 | #8 | #9 |
|----|----|----|----|----|----|----|----|----|----|

$\Delta f$ = 15kHz

One slot, 1ms

$\Delta f$ = 30kHz

One slot, 0.5ms

$\Delta f$ = 60kHz

One slot, 0.25ms

$\Delta f$ = 120kHz

One slot, 0.125ms

$\Delta f$ = 240kHz

One slot, 0.0625ms

# *FIG.3*

One subframe

Resource grid, 2deltaf

Resource grid, deltaf

Carrier bandwidth

One resource block-12 subcarriers, subcarrier spacing 2deltaf

One resource block-12 subcarriers, subcarrier spacing 2deltaf

# FIG.4

Carrier (w. RF requirements)

BWP#1 active | BWP#2 active | BWP#1 active

BWP#1

BWP#2

frequency

time

Switch of active bandwidth part

# *FIG.5*

# FIG.6

TERMINAL(UE)     BASE STATION(gNB)

Preamble(PRACH)

RA Response(RAR)

"Message 3"

Collision resolution

"Message 4"

# FIG.7

CORESET #4

CORESET #3

CORESET #2

CORESET #1

one slot

# FIG.8

# *FIG.9*

```
                    ┌─────────────┐
                    │    start    │
                    └─────────────┘
                           │
                           ▼
        ┌─────────────────────────────────────┐
        │  receive CG configuration information│  ~S910
        └─────────────────────────────────────┘
                           │
                           ▼
        ┌─────────────────────────────────────┐
        │         identify uplink grant        │  ~S920
        └─────────────────────────────────────┘
                           │
                           ▼
        ┌─────────────────────────────────────┐
        │            transmit PUSCH            │  ~S930
        └─────────────────────────────────────┘
                           │
                           ▼
                    ┌─────────────┐
                    │     end     │
                    └─────────────┘
```

# *FIG.10*

```
              ┌──────────┐
              │  start   │
              └────┬─────┘
                   │
                   ▼
   ┌──────────────────────────────────────┐
   │ transmit CG configuration information │ ──── S1010
   └───────────────────┬──────────────────┘
                       │
                       ▼
   ┌──────────────────────────────────────┐
   │            receive PUSCH              │ ──── S1020
   └───────────────────┬──────────────────┘
                       │
                       ▼
              ┌──────────┐
              │   end    │
              └──────────┘
```

# FIG.11

| |
|---|
| **periodicity** <br> Periodicity for UL transmission without UL grant for type 1 and type 2 (see TS 38.321 [3], clause 5.8.2). <br> The following periodicities are supported depending on the configured subcarrier spacing [symbols]: <br><br> 15 kHz:             2, 7, n*14, where n={1, 2, 4, 5, 8, 10, 16, 20, 32, 40, 64, 80, 128, 160, 320, 640} <br> 30 kHz:             2, 7, n*14, where n={1, 2, 4, 5, 8, 10, 16, 20, 32, 40, 64, 80, 128, 160, 256, 320, 640, 1280} <br> 60 kHz with normal CP   2, 7, n*14, where n={1, 2, 4, 5, 8, 10, 16, 20, 32, 40, 64, 80, 128, 160, 256, 320, 512, 640, 1280, 2560} <br> 60 kHz with ECP:       2, 6, n*12, where n={1, 2, 4, 5, 8, 10, 16, 20, 32, 40, 64, 80, 128, 160, 256, 320, 512, 640, 1280, 2560} <br> 120 kHz:           2, 7, n*14, where n={1, 2, 4, 5, 8, 10, 16, 20, 32, 40, 64, 80, 128, 160, 256, 320, 512, 640, 1024, 1280, 2560, 5120} <br> 480 and 960 kHz:     n*14, where n={1, 2, 4, 5, 8, 10, 16, 20, 32, 40, 64, 80, 128, 160, 256, 320, 512, 640, 1024, 1280, 2560, 5120} |
| **periodicityExt** <br> This field is used to calculate the periodicity for UL transmission without UL grant for type 1 and type 2 (see TS 38.321 [3], clause 5,8.2). If this field is present, the field *periodicity* is ignored. <br> The following periodicites are supported depending on the configured subcarrier spacing [symbols]: <br><br> 15 kHz:                  *periodicityExt*\*14, where *periodicityExt* has a value between 1 and 640. <br> 30 kHz:                  *periodicityExt*\*14, where *periodicityExt* has a value between 1 and 1280. <br> 60 kHz with normal CP:   *periodicityExt*\*14, where *periodicityExt* has a value between 1 and 2560. <br> 60 kHz with ECP:        *periodicityExt*\*12, where *periodicityExt* has a value between 1 and 2560. <br> 120 kHz:            *periodicityExt*\*14, where *periodicityExt* has a value between 1 and 5120. <br> 480 kHz:            periodicityExt\*14, where periodicityExt has a value between 1 and 20480. <br> 960 kHz:            periodicityExt\*14, where periodicityExt has a value between 1 and 40960. |

EP 4 561 239 A1

# FIG.12

FIG.13

EP 4 561 239 A1

# FIG.14

1400

1410

controller

1420

transmitter

1430

receiver

# *FIG.15*

1500

1510

controller

1520

transmitter

1530

receiver

## INTERNATIONAL SEARCH REPORT

| International application No. |
|---|
| **PCT/KR2023/009928** |

**A.    CLASSIFICATION OF SUBJECT MATTER**

**H04W 72/23**(2023.01)i; **H04W 72/04**(2009.01)i; **H04L 27/26**(2006.01)i

According to International Patent Classification (IPC) or to both national classification and IPC

**B.    FIELDS SEARCHED**

Minimum documentation searched (classification system followed by classification symbols)

H04W 72/23(2023.01); H04B 7/06(2006.01); H04L 1/16(2006.01); H04L 5/00(2006.01); H04W 72/04(2009.01); H04W 72/10(2009.01); H04W 72/12(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CG(configured grant), PUSCH(physical uplink shared channel), L1 시그널링(layer-1 signalling), 구성정보(configuration information)

**C.    DOCUMENTS CONSIDERED TO BE RELEVANT**

| Category* | Citation of document, with indication, where appropriate, of the relevant passages | Relevant to claim No. |
|---|---|---|
| X | US 2020-0146034 A1 (LENOVO (SINGAPORE) PTE. LTD.) 07 May 2020 (2020-05-07) See paragraphs [0093] and [0116]; and claim 1. | 1-5,8-11,13-17 |
| Y | | 6-7,12,18-19 |
| Y | US 2020-0059322 A1 (MOTOROLA MOBILITY LLC) 20 February 2020 (2020-02-20) See paragraphs [0053] and [0108]; and figure 8. | 6-7,12,18-19 |
| A | KR 10-2022-0097936 A (LG ELECTRONICS INC.) 08 July 2022 (2022-07-08) See paragraphs [0215]-[0221]; claim 1; and figure 10. | 1-19 |
| A | WO 2021-194218 A1 (LG ELECTRONICS INC.) 30 September 2021 (2021-09-30) See paragraphs [0384]-[0398]; claim 1; and figure 11. | 1-19 |

☑ Further documents are listed in the continuation of Box C.     ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **20 October 2023** | **23 October 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

<table>
<tr><td colspan="2"></td><td>International application No.<br><br>**PCT/KR2023/009928**</td></tr>
</table>

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2022-0006635 A (TELEFONAKTIEBOLAGET LM ERICSSON(PUBL)) 17 January 2022 (2022-01-17)<br>  See paragraphs [0131]-[0135]; claim 1; and figure 3. | 1-19 |

<table>
<tr><td colspan="2" align="center"><strong>INTERNATIONAL SEARCH REPORT</strong><br>Information on patent family members</td><td colspan="2">International application No.<br><strong>PCT/KR2023/009928</strong></td></tr>
</table>

| Patent document cited in search report | | | Publication date (day/month/year) | Patent family member(s) | | | Publication date (day/month/year) |
|---|---|---|---|---|---|---|---|
| US | 2020-0146034 | A1 | 07 May 2020 | CN | 112930706 | A | 08 June 2021 |
| | | | | EP | 3874873 | A1 | 08 September 2021 |
| | | | | US | 11184907 | B2 | 23 November 2021 |
| | | | | US | 11641646 | B2 | 02 May 2023 |
| | | | | US | 2022-0039128 | A1 | 03 February 2022 |
| | | | | WO | 2020-089869 | A1 | 07 May 2020 |
| US | 2020-0059322 | A1 | 20 February 2020 | CN | 110463110 | A | 15 November 2019 |
| | | | | EP | 3602887 | A1 | 05 February 2020 |
| | | | | EP | 3602887 | A4 | 25 November 2020 |
| | | | | US | 11411684 | B2 | 09 August 2022 |
| | | | | US | 2022-0385405 | A1 | 01 December 2022 |
| | | | | WO | 2018-176384 | A1 | 04 October 2018 |
| KR | 10-2022-0097936 | A | 08 July 2022 | CN | 114651513 | A | 21 June 2022 |
| | | | | EP | 4057750 | A1 | 14 September 2022 |
| | | | | JP | 2023-500887 | A | 11 January 2023 |
| | | | | JP | 7304490 | B2 | 06 July 2023 |
| | | | | KR | 10-2541190 | B1 | 13 June 2023 |
| | | | | US | 11638282 | B2 | 25 April 2023 |
| | | | | US | 2022-0264608 | A1 | 18 August 2022 |
| | | | | WO | 2021-091350 | A1 | 14 May 2021 |
| WO | 2021-194218 | A1 | 30 September 2021 | KR | 10-2022-0157964 | A | 29 November 2022 |
| | | | | US | 2023-0189254 | A1 | 15 June 2023 |
| KR | 10-2022-0006635 | A | 17 January 2022 | AU | 2020-274825 | A1 | 09 December 2021 |
| | | | | CN | 113826432 | A | 21 December 2021 |
| | | | | CO | 2021014990 | A2 | 19 November 2021 |
| | | | | EP | 3970434 | A1 | 23 March 2022 |
| | | | | EP | 3970434 | A4 | 25 January 2023 |
| | | | | JP | 2022-533336 | A | 22 July 2022 |
| | | | | MX | 2021013759 | A | 10 December 2021 |
| | | | | US | 2022-0256575 | A1 | 11 August 2022 |
| | | | | WO | 2020-228665 | A1 | 19 November 2020 |
| | | | | ZA | 202110156 | B | 26 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220088807

- KR 1020230088926